# EUROPEAN PATENT SPECIFICATION

(11) **EP 3 133 773 B1**
(45) Date of publication and mention of the grant of the patent: **09.01.2019**
(21) Application number: 14891291.8
(22) Date of filing: 07.05.2014
(51) Int. Cl.: H04L 12/28, H04W 28/08, H04L 12/751, H04L 12/721, H04L 12/801, H04L 12/825

(54) **METHOD, APPARATUS AND SYSTEM FOR DATA INTERACTION BETWEEN APS IN WIFI SYSTEM**
VERFAHREN, VORRICHTUNG UND SYSTEM ZUR DATENINTERAKTION ZWISCHEN ANWENDUNGEN IN EINEM WIFI-SYSTEM
PROCÉDÉ, APPAREIL ET SYSTÈME POUR UNE INTERACTION DE DONNÉES ENTRE DES POINTS D'ACCÈS (AP) DANS UN SYSTÈME WIFI

(43) Date of publication of application: 22.02.2017
(73) Proprietor: Huawei Technologies Co., Ltd., Longgang District Shenzhen, Guangdong 518129 (CN)
(72) Inventor: LI, Bo, Xi'an Shaanxi 710072 (CN); YANG, Bo, Xi'an Shaanxi 710072 (CN); LIN, Yingpei, Shenzhen Guangdong 518129 (CN)
(74) Representative: Epping - Hermann - Fischer
(86) International application number: PCT/CN2014/076929
(87) International publication number: WO 2015/168875

(56) References cited:
- CN-A- 1 829 177
- CN-A- 101 347 005
- CN-A- 101 635 959
- CN-Y- 201 290 123
- US-A1- 2007 140 163
- US-A1- 2008 013 558
- US-A1- 2011 222 517
- US-A1- 2012 135 677

## Description

### TECHNICAL FIELD

Embodiments of the present invention relate to the field of communications technologies, and in particular, to a method, an apparatus, and a system for data exchange between access points (Access Point, AP for short) in a WiFi system.

### BACKGROUND

As a WiFi technology is increasingly widely used, demands on WiFi in hotspot scenarios of dense deployment, such as a station, an airport, a stadium, and a shopping mall, are becoming more. In these dense deployment scenarios, on the one hand, load borne by different APs is different, and therefore demands on resources are different; on the other hand, the APs are located at different geographical positions, and therefore interference suffered by the APs is not the same. Considering a situation in which the load between the APs is different and a difference in the interference suffered by the APs, the resources between these densely-deployed APs need to be managed properly and allocated dynamically, so as to improve resource utilization and network performance.

To implement load balance between the APs, a load balance mechanism is introduced in the 802.11k standard. According to the load balance mechanism, an AP exchanges, in a wired manner, load-related information with another AP whose coverage overlaps coverage of the AP, and determines a load situation of each AP according to the information, so as to make a load balance decision.

However, in a dense deployment scenario, APs of multiple systems generally coexist, and APs of inter-systems are not connected in a wired manner. Therefore, the APs of the inter-systems cannot perform data exchange in the wired manner, and a manner of wired exchange is not applicable to the dense deployment scenario in which the APs of the multiple systems coexist. In addition, the manner of wired exchange is not applicable to APs that need to perform wireless information exchange.

US 2007/0140163 A1 discloses a system and method wherein mobile nodes scan both 802.16 and 802.11 radio channels for neighbor access points. A mobile node reports both WiMax and WiFi neighbor access points to its parent access point. A parent access point advertises both WiMax and WiFi neighbor access points to child mobile nodes to facilitate faster roaming and load balancing. A parent WiMax AP can direct a mobile node to roam to a neighbor WiFi access point that has a lighter load or offers enhanced services. As an option, a location tracking protocol is used to determine the location of a mobile node and the mobile node's parent AP advertises neighbor APs that offer services in the mobile node's location.

US 2011/0222517 A1 discloses that in a wireless LAN (Local Area Network), the communication range is limited by the coverage area of the wireless LAN devices in the network. In order to remove such limitation, a technology called WDS (Wireless Distribution System) has been developed. In this system, when it is desired to perform communication over a wide area exceeding the coverage area of a wireless LAN device, a plurality of wireless LAN devices serving as access points are installed to wirelessly relay a packet between the access points.

### SUMMARY

Embodiments of the present invention provide a method, and apparatuses for data exchange between APs in a WiFi system, so as to resolve a problem in the prior art that APs that are connected in a non-wired manner in a dense deployment scenario or need to perform wireless information exchange in a dense deployment scenario cannot perform data exchange.

A first aspect of the present invention provides a method for data exchange between access points APs in a WiFi system, including:
receiving, by a source AP, available APs of all stations STAs having association relationships with the source AP, and operating channels of the available APs, where the available APs and the operating channels of the available APs are sent by the STAs;
determining, by the source AP, a relay STA according to the received available APs of the STAs and the received operating channels of the available APs, where an available AP of the relay STA includes a destination AP that needs to perform data exchange with the source AP to manage and allocate dynamically resources between densely-deployed APs; and
sending a relay request message to the relay STA, where the relay request message includes the destination AP, so that the relay STA sends data from the source AP to the destination AP after receiving the relay request message, so as to perform the data exchange between the source AP and the destination AP.

In a first possible implementation manner of the first aspect, the determining, by the source AP, a relay STA according to the received available APs of the STAs and the received operating channels of the available APs includes:
determining a candidate STA from all the STAs having the association relationships with the source AP, where an available AP of the candidate STA includes the destination AP;
sending, by the source AP, a parameter feedback request to the candidate STA, where the parameter feedback request includes the destination AP;
receiving a link quality parameter or a load parameter that is of an operating channel of the destination AP in the available AP of the candidate STA and that is fed back by the candidate STA; and
determining an operating channel having a maximum link quality parameter or a minimum load parameter in the operating channel of the destination AP of the candidate STA as an optimal operating channel, and determining a candidate STA including the optimal operating channel as the relay STA.

In a second possible implementation manner of the first aspect, the method further includes:
receiving, by the source AP, link quality parameters or load parameters that are of the operating channels of the available APs of all the STAs having the association relationships with the source AP and that are sent by the STAs; and
the determining, by the source AP, a relay STA according to the received available APs of the STAs and the received operating channels of the available APs includes:
   determining a candidate STA from all the STAs having the association relationships with the source AP, where an available AP of the candidate STA includes the destination AP; and
   determining an operating channel having a maximum link quality parameter or a minimum load parameter in an operating channel of the destination AP of the candidate STA as an optimal operating channel, and determining a candidate STA including the optimal operating channel as the relay STA.

With reference to the first possible implementation manner of the first aspect or the second possible implementation manner of the first aspect, in a third possible implementation manner, the relay request message further includes the optimal operating channel, where the optimal operating channel is an operating channel used by the relay STA when the relay STA sends the data from the source AP to the destination AP.

In a fourth possible implementation manner of the first aspect, the determining, by the source AP, a relay STA according to the received available APs of the STAs and the received operating channels of the available APs includes:
randomly selecting, from all the STAs having the association relationships with the source AP, a STA of which an available AP includes the destination AP and the destination AP has at least one operating channel as the relay STA.

In a fifth possible implementation manner of the first aspect, the relay request message further includes the data from the source AP; or
after receiving a relay response message fed back by the relay STA, the source AP sends data to the relay STA.

A second aspect of the present invention provides method steps performed by the relay STA in the method according to the first aspect, including:
sending, by the relay STA determined by the source AP, an available AP of the relay STA and an operating channel of the available AP to the source AP having an association relationship with the relay STA, wherein the available AP of the relay STA comprises the destination AP; and
if the relay STA receives the relay request message sent by the source AP, sending, by the relay STA, data from the source AP to the destination AP.

In a first possible implementation manner of the second aspect, before the sending, by the relay STA, data from the source AP to the destination AP, the method further includes:
randomly selecting an operating channel from an operating channel of the destination AP of the relay STA; or if the relay STA has acquired a link quality parameter or a load parameter of the operating channel of the available AP of the relay STA, selecting, by the relay STA, from an operating channel of the destination AP of the relay STA, an operating channel having a maximum link quality parameter or a minimum load parameter; and
the sending, by the relay STA, the data to the destination AP includes:
   sending, by the relay STA, the data from the source AP to the destination AP by using the selected operating channel.

With reference to the first possible implementation manner of the second aspect, in a second possible implementation manner of the second aspect, the sending, by the relay STA, the data from the source AP to the destination AP by using the selected operating channel includes:
if the relay STA has an association relationship with the destination AP, sending the data from the source AP to the destination AP by directly using the selected operating channel; or
if the relay STA has no association relationship with the destination AP and the relay STA can have association relationships with multiple APs, initiating, by the relay STA, an association operation to the destination AP, and after an association relationship between the relay STA and the destination AP is established, sending the data from the source AP to the destination AP by using the selected operating channel; or
if the relay STA has no association relationship with the destination AP and the relay STA can have an association relationship with only one AP, initiating, by the relay STA, a disassociation operation to the source AP, after the relay STA is disassociated from the source AP, initiating, by the relay STA, an association operation to the destination AP, and after an association relationship between the relay STA and the destination AP is established, sending the data from the source AP to the destination AP by using the selected operating channel; or
if the relay STA has no association relationship with the destination AP, sending a common function frame to the destination AP by using the selected operating channel, where the common function frame carries the data from the source AP.

In a third possible implementation manner of the second aspect, the relay request message further includes an operating channel used by the relay STA when the relay STA sends the data from the source AP to the destination AP; and
the sending, by the relay STA, the data to the destination AP includes:
if the relay STA has an association relationship with the destination AP, sending the data from the source AP to the destination AP by directly using the operating channel included in the relay request message; or
if the relay STA has no association relationship with the destination AP and the relay STA can have association relationships with multiple APs, initiating, by the relay STA, an association operation to the destination AP, and after an association relationship between the relay STA and the destination AP is established, sending the data from the source AP to the destination AP by using the operating channel included in the relay request message; or
if the relay STA has no association relationship with the destination AP and the relay STA can have an association relationship with only one AP, initiating, by the relay STA, a disassociation operation to the source AP, after the relay STA is disassociated from the source AP, initiating, by the relay STA, an association operation to the destination AP, and after an association relationship between the relay STA and the destination AP is established, sending the data from the source AP to the destination AP by using the operating channel included in the relay request message; or
if the relay STA has no association relationship with the destination AP, sending a common function frame to the destination AP by using the operating channel included in the relay request message, where the common function frame carries the data from the source AP.

In a fourth possible implementation manner of the second aspect, the relay request message further includes the data from the source AP; or
after receiving the relay request message sent by the source AP, the relay STA sends a relay response message to the source AP, and receives data sent by the source AP.

With reference to the first possible implementation manner of the second aspect, the second possible implementation manner of the second aspect, the third possible implementation manner of the second aspect, or the fourth possible implementation manner of the second aspect, in a fifth possible implementation manner of the second aspect, the method further includes:
receiving, by the relay STA, a data exchange result fed back by the destination AP; and
if the relay STA has the association relationship with the source AP, feeding back the data exchange result to the source AP; or if the relay STA has no association relationship with the source AP, initiating a disassociation operation to the destination AP, after the relay STA is disassociated from the destination AP, initiating an association operation to the source AP, and after an association relationship between the relay STA and the source AP is established, sending the data exchange result to the source AP; or if the relay STA has no association relationship with the source AP, sending the data exchange result to the source AP by using a common function frame.

In a sixth possible implementation manner of the second aspect, after the sending, by a relay STA, an available AP of the relay STA and an operating channel of the available AP to a source AP having an association relationship with the relay STA, the method further includes:
sending a link quality parameter or a load parameter of the operating channel of the available AP of the relay STA to the source AP; or
if the relay STA receives a parameter feedback request sent by the source AP, feeding back a link quality parameter or a load parameter of an operating channel of the destination AP of the relay STA to the source AP, where the feedback request message includes the destination AP.

A third aspect of the present invention provides an access point AP, which is a source AP, including:
a receiving module, configured to receive available APs of all stations STAs having association relationships with the source AP, and operating channels of the available APs, where the available APs and the operating channels of the available APs are sent by the STAs;
a determining module, configured to: after the receiving module receives the available APs of the STAs and the operating channels of the available APs, determine a relay STA according to the received available APs of the STAs and the received operating channels of the available APs, where an available AP of the relay STA includes a destination AP that needs to perform data exchange with the source AP to manage and allocate dynamically resources between densely-deployed APs; and
a sending module, configured to: after the determining module determines the relay STA, send a relay request message to the relay STA, where the relay request message includes the destination AP, so that the relay STA sends data from the source AP to the destination AP after receiving the relay request message, so as to perform the data exchange between the source AP and the destination AP.

In a first possible implementation manner of the third aspect, the determining module includes:
a candidate determining module, configured to: after the receiving module receives the available APs of all the STAs having the association relationships with the source AP, and the operating channels of the available APs, where the available APs and the operating channels of the available APs are sent by the STAs, determine a candidate STA from all the STAs having the association relationships with the source AP, where an available AP of the candidate STA includes the destination AP;
a request sending module, configured to: after the candidate determining module determines the candidate STA, send a parameter feedback request to the candidate STA, where the parameter feedback request includes the destination AP;
a feedback receiving module, configured to: after the request sending module sends the parameter feedback request, receive a link quality parameter or a load parameter that is of an operating channel of the destination AP in the available AP of the candidate STA and that is fed back by the candidate STA; and
a relay determining module, configured to: after the feedback receiving module, determine an operating channel having a maximum link quality parameter or a minimum load parameter in the operating channel of the destination AP of the candidate STA as an optimal operating channel, and determine a candidate STA including the optimal operating channel as the relay STA.

In a second possible implementation manner of the third aspect, the receiving module is further configured to receive link quality parameters or load parameters that are of the operating channels of the available APs of all the STAs having the association relationships with the source AP and that are sent by the STAs; and
the relay determining module in the determining module is further configured to: after the candidate determining module determines the candidate STA, determine an operating channel having a maximum link quality parameter or a minimum load parameter in an operating channel of the destination AP of the candidate STA as an optimal operating channel, and determine a candidate STA including the optimal operating channel as the relay STA.

With reference to the first possible implementation manner of the third aspect or the second possible implementation manner of the third aspect, in a third possible implementation manner of the third aspect, the relay request message further includes the optimal operating channel, where the optimal operating channel is an operating channel used by the relay STA when the relay STA sends the data from the source AP to the destination AP.

In a fourth possible implementation manner of the third aspect, the determining module is specifically configured to: after the receiving module receives the available APs of all the STAs having the association relationships with the source AP, and the operating channels of the available APs, where the available APs and the operating channels of the available APs are sent by the STAs, randomly select, from all the STAs having the association relationships with the source AP, a STA of which an available AP includes the destination AP and the destination AP has at least one operating channel as the relay STA.

In a fifth possible implementation manner of the third aspect, the relay request message further includes the data from the source AP; or
the sending module is further configured to: after the receiving module receives a relay response message fed back by the relay STA, send data to the relay STA.

A fourth aspect of the present invention provides a system for data exchange between access points, APs, in a WiFi system, including an AP, which is the source AP according to the second aspect, a station, STA, wherein the STA is the relay STA determined by the source AP, and a destination AP configured to receive data that is from the source AP and that is sent by the relay STA, wherein the relay STA comprises:
an information sending module, configured to send an available AP of the relay STA and an operating channel of the available AP to the source AP having an association relationship with the relay STA, wherein the available AP of the relay STA comprises the destination AP; and
a data sending module, configured to: after the information sending module sends the available AP of the relay STA and the operating channel of the available AP, if the relay STA receives a relay request message sent by the source AP, where the relay request message includes the destination AP, send data from the source AP to the destination AP.

In a first possible implementation manner of the fourth aspect, the relay STA further includes:
a selection module, configured to: before the data sending module sends the data from the source AP, randomly select an operating channel from an operating channel of the destination AP of the relay STA; or if the relay STA has acquired a link quality parameter or a load parameter of the operating channel of the available AP of the relay STA, select, from an operating channel of the destination AP of the relay STA, an operating channel having a maximum link quality parameter or a minimum load parameter; and
the data sending module is configured to send the data from the source AP to the destination AP by using the selected operating channel.

With reference to the first possible implementation manner of the fourth aspect, in a second possible implementation manner of the fourth aspect, the data sending module is specifically configured to: if the relay STA has an association relationship with the destination AP, send the data from the source AP to the destination AP by directly using the selected operating channel; or
if the relay STA has no association relationship with the destination AP and the relay STA can have association relationships with multiple APs, initiate an association operation to the destination AP, and after an association relationship between the relay STA and the destination AP is established, send the data from the source AP to the destination AP by using the selected operating channel; or
if the relay STA has no association relationship with the destination AP and the relay STA can have an association relationship with only one AP, initiate a disassociation operation to the source AP, after the relay STA is disassociated from the source AP, initiate an association operation to the destination AP, and after an association relationship between the relay STA and the destination AP is established, send the data from the source AP to the destination AP by using the selected operating channel; or
if the relay STA has no association relationship with the destination AP, send a common function frame to the destination AP by using the selected operating channel, where the common function frame carries the data from the source AP.

In a third possible implementation manner of the fourth aspect, the relay request message further includes an operating channel used by the relay STA when the relay STA sends the data from the source AP to the destination AP; and
the data sending module is specifically configured to:
if the relay STA has an association relationship with the destination AP, send the data from the source AP to the destination AP by directly using the operating channel included in the relay request message; or
if the relay STA has no association relationship with the destination AP and the relay STA can have association relationships with multiple APs, initiate an association operation to the destination AP, and after an association relationship between the relay STA and the destination AP is established, send the data from the source AP to the destination AP by using the operating channel included in the relay request message; or
if the relay STA has no association relationship with the destination AP and the relay STA can have an association relationship with only one AP, initiate a disassociation operation to the source AP, after the relay STA is disassociated from the source AP, initiate an association operation to the destination AP, and after an association relationship between the relay STA and the destination AP is established, send the data from the source AP to the destination AP by using the operating channel included in the relay request message; or
if the relay STA has no association relationship with the destination AP, send a common function frame to the destination AP by using the operating channel included in the relay request message, where the common function frame carries the data from the source AP.

In a fourth possible implementation manner of the fourth aspect, the relay request message further includes the data from the source AP; or
the relay STA further includes:
a sending and receiving module, configured to: after the relay STA receives the relay request message sent by the source AP, send a relay response message to the source AP, and receive data sent by the source AP.

With reference to the first possible implementation manner of the fourth aspect, the second possible implementation manner of the fourth aspect, the third possible implementation manner of the fourth aspect, or the fourth possible implementation manner of the fourth aspect, in a fifth possible implementation manner of the fourth aspect, the relay STA further includes:
a result receiving module, configured to: after the data sending module sends the data, receive a data exchange result fed back by the destination AP; and
a result feedback module, configured to: after the result receiving module receives the data exchange result, if the relay STA has the association relationship with the source AP, feed back the data exchange result to the source AP; or if the relay STA has no association relationship with the source AP, initiate a disassociation operation to the destination AP, after the relay STA is disassociated from the destination AP, initiate an association operation to the source AP, and after an association relationship between the relay STA and the source AP is established, send the data exchange result to the source AP; or if the STA has no association relationship with the source AP, send the data exchange result to the source AP by using a common function frame.

In a sixth possible implementation manner of the fourth aspect, the relay STA further includes:
a parameter feedback module, configured to: after the information sending module sends the available AP of the relay STA and the operating channel of the available AP, send a link quality parameter or a load parameter of the operating channel of the available AP of the relay STA to the source AP; or if the relay STA receives a parameter feedback request sent by the source AP,
feed back a link quality parameter or a load parameter of an operating channel of the destination AP of the relay STA to the source AP, where the feedback request message includes the destination AP.

It can be seen from the foregoing technical solutions that the embodiments of the present invention have the following advantages:
A source AP receives available APs of all stations (Station, STA for short) having association relationships with the source AP, and operating channels of the available APs, where the available APs and the operating channels of the available APs are sent by the STAs; and the source AP may determine a relay STA according to the received available APs of the STAs and the received operating channels of the available APs, where an available AP of the relay STA includes a destination AP that needs to perform data exchange with the source AP, and send a relay request message to the relay STA, where the relay request message includes the destination AP, so that the relay STA sends data from the source AP to the destination AP after receiving the relay request message, so as to perform the data exchange between the source AP and the destination AP. The relay STA is used to receive the relay request message sent by the source AP, and then the relay STA sends the data from the source AP to the destination AP. Therefore, the data exchange between the APs can be implemented effectively, particularly data exchange between APs that are connected in a non-wired manner in a dense deployment scenario or need to perform wireless information transmission in a dense deployment scenario.

### BRIEF DESCRIPTION OF DRAWINGS

FIG. 1 is a schematic diagram of a method for data exchange between APs in a WiFi system according to an embodiment of the present invention;
FIG. 2a is a schematic diagram of a list of an available AP of a STA1 having an association relationship with a source AP, and an operating channel of the available AP according to an embodiment of the present invention;
FIG. 2b is a schematic diagram of a list of an available AP of a STA2 having an association relationship with a source AP, and an operating channel of the available AP according to an embodiment of the present invention;
FIG. 3 is another schematic diagram of a method for data exchange between APs in a WiFi system according to an embodiment of the present invention;
FIG. 4 is another schematic diagram of a method for data exchange between APs in a WiFi system according to an embodiment of the present invention;
FIG. 5 is another schematic diagram of a method for data exchange between APs in a WiFi system according to an embodiment of the present invention;
FIG. 6 is another schematic diagram of a method for data exchange between APs in a WiFi system according to an embodiment of the present invention;
FIG. 7 is an application scenario of a system for data exchange between APs in a WiFi system according to an embodiment of the present invention;
FIG. 8 is a schematic diagram of a structure of an AP according to an embodiment of the present invention;
FIG. 9 is another schematic diagram of a structure of an AP according to an embodiment of the present invention;
FIG. 10 is a schematic diagram of a structure of a STA according to an embodiment of the present invention;
FIG. 11 is another schematic diagram of a structure of an AP according to an embodiment of the present invention;
FIG. 12 is another schematic diagram of a structure of a STA according to an embodiment of the present invention; and
FIG. 13 is a structural diagram of a system for data exchange between APs in a WiFi system according to an embodiment of the present invention.

### DESCRIPTION OF EMBODIMENTS

The embodiments of the present invention provide a method, an apparatus, and a system for data exchange between APs in a WiFi system, so as to resolve a problem in the prior art that APs that are connected in a non-wired manner in a dense deployment scenario or need to perform wireless information exchange in a dense deployment scenario cannot perform data exchange.

The following provides detailed descriptions separately by using specific embodiments.

To make the invention objectives, features, and advantages of the present invention clearer and more comprehensible, the following clearly and completely describes the technical solutions in the embodiments of the present invention with reference to the accompanying drawings in the embodiments of the present invention. Apparently, the embodiments described in the following are merely a part rather than all of the embodiments of the present invention. All other embodiments obtained by a person of ordinary skill in the art based on the embodiments of the present invention without creative efforts shall fall within the protection scope of the present invention.

In the specification, claims, and accompanying drawings of the present invention, the terms "first", "second", "third", "fourth", and so on (if existent) are intended to distinguish between similar objects but do not necessarily indicate specific order or a specific sequence. It should be understood that the data termed in such a way are interchangeable in proper circumstances so that the embodiments of the present invention described herein can, for example, be implemented in order except the order illustrated or described herein. In addition, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, product, or device.

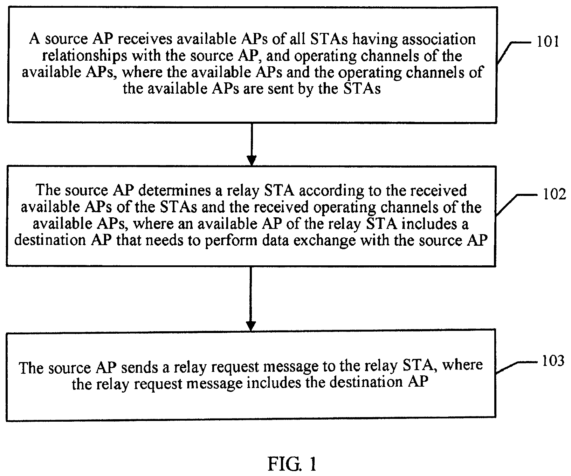

For better understanding of the technical solutions of the present invention, refer to FIG. 1, which is an embodiment of a method for data exchange between APs in a WiFi system according to an embodiment of the present invention. The method includes the following steps:
101. A source AP receives available APs of all STAs having association relationships with the source AP, and operating channels of the available APs, where the available APs and the operating channels of the available APs are sent by the STAs.

In this embodiment of the present invention, a basic service set (Basic Service Set, BSS) includes an AP and a STA, and one AP can have an association relationship with at least one STA, where that an AP has an association relationship with a STA refers to that the STA can provide a service for the AP.

In this embodiment of the present invention, a STA having an association relationship with the source AP may perform all-channel scanning periodically or when receiving a scanning command of the source AP, so as to acquire an available AP of the STA and an operating channel of the available AP. A STA may also perform all-channel scanning after an association relationship between the STA and an AP is established, so as to acquire an available AP of the STA and an operating channel of the available AP.

After obtaining, by means of the scanning, the available AP of the STA and the operating channel of the available AP, the STA having the association relationship with the source AP sends the obtained available AP of the STA and the obtained operating channel of the available AP to the source AP. Therefore, the source AP receives the available APs of all the STAs having the association relationships with the source AP, and the operating channels of the available APs, where the available APs and the operating channels of the available APs are sent by the STAs. For example, if the STAs having the association relationships with the source AP include a STA1, a STA2, and a STA3, the source AP receives an available AP of the STA1 and an operating channel of the available AP, an available AP of the STA2 and an operating channel of the available AP, and an available AP of the STA3 and an operating channel of the available AP.

It should be noted that in this embodiment of the present invention, each AP has at least one operating channel, where the operating channel refers to a channel used by the AP to establish a BSS.

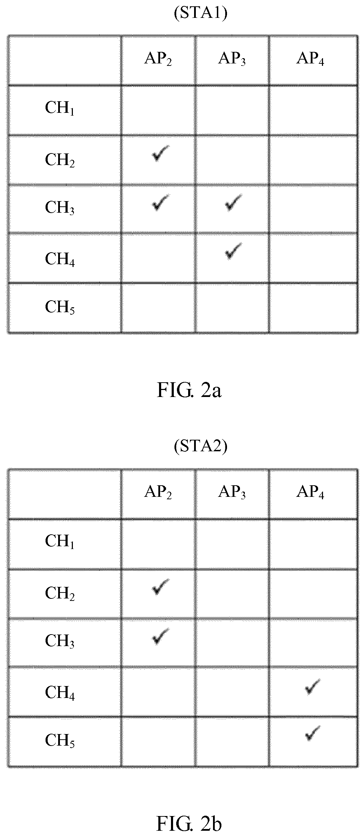

For better understanding of this embodiment of the present invention, refer to FIG. 2a, which is a list of an available AP of a STA1 having an association relationship with a source AP, and an operating channel of the available AP; and refer to FIG. 2b, which is a list of an available AP of a STA2 having an association relationship with a source AP, and an operating channel of the available AP. "√" in FIG. 2a and FIG. 2b indicates an available operating channel of a corresponding AP. For example, in FIG. 2a, on the STA1, operating channels of AP₂ are Ch₂ and Ch₃.

102. The source AP determines a relay STA according to the received available APs of the STAs and the received operating channels of the available APs, where an available AP of the relay STA includes a destination AP that needs to perform data exchange with the source AP.

In this embodiment of the present invention, the source AP determines the relay STA according to the received available APs of the STAs and the received operating channels of the available APs, and the available AP of the relay STA includes the destination AP that needs to perform the data exchange with the source AP.

103. Send a relay request message to the relay STA, where the relay request message includes the destination AP, so that the relay STA sends data from the source AP to the destination AP after receiving the relay request message, so as to perform the data exchange between the source AP and the destination AP.

In this embodiment of the present invention, after determining the relay STA, the source AP sends the relay request message to the relay STA, where the relay request message includes the destination AP, so that the relay STA sends the data from the source AP to the destination AP after receiving the relay request message, so as to perform the data exchange between the source AP and the destination AP.

In this embodiment of the present invention, a source AP receives available APs of all STAs having association relationships with the source AP, and operating channels of the available APs, where the available APs and the operating channels of the available APs are sent by the STAs; the source AP may determine a relay STA according to the received available APs of the STAs and the received operating channels of the available APs, where an available AP of the relay STA includes a destination AP that needs to perform data exchange with the source AP; and the source AP sends a relay request message to the relay STA, where the relay request message includes the destination AP, so that the relay STA sends data from the source AP to the destination AP after receiving the relay request message, so as to perform the data exchange between the source AP and the destination AP. The relay STA is used to receive the relay request message sent by the source AP, so that the relay STA can send the data from the source AP to the destination AP. Therefore, the data exchange between the APs can be implemented effectively, particularly data exchange between APs that are connected in a non-wired manner in a dense deployment scenario or need to perform wireless information transmission in a dense deployment scenario.

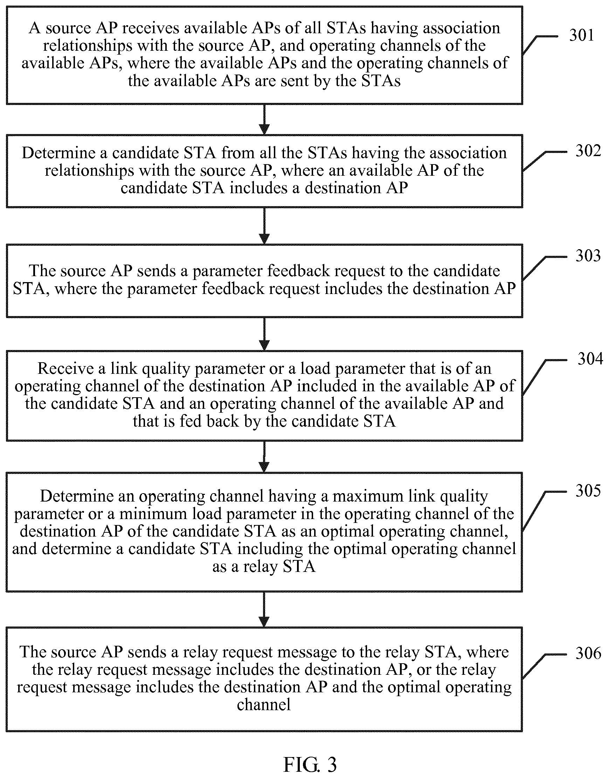

For better understanding of the technical solutions in the embodiments of the present invention, refer to FIG. 3, which is an embodiment of a method for data exchange between APs in a WiFi system according to an embodiment of the present invention. The method includes the following steps:
301. A source AP receives available APs of all STAs having association relationships with the source AP, and operating channels of the available APs, where the available APs and the operating channels of the available APs are sent by the STAs.

Content described in step 301 is similar to content described in step 101 in the embodiment shown in FIG. 1, and details are not described herein again.

302. Determine a candidate STA from all the STAs having the association relationships with the source AP, where an available AP of the candidate STA includes a destination AP.

In this embodiment of the present invention, after receiving the available APs and the operating channels of the available APs that are sent by the STAs having the association relationships with the source AP, the source AP determines the candidate STA by using the received available APs of the STAs and the received operating channels of the available APs, where the candidate STA is a STA of which an available AP includes the destination AP that needs to perform data exchange with the source AP.

303. The source AP sends a parameter feedback request to the candidate STA, where the parameter feedback request includes the destination AP.

In this embodiment of the present invention, the source AP sends the parameter feedback request to the determined candidate STA, where the parameter feedback request includes the destination AP, requesting the candidate STA to feed back a link quality parameter or a load parameter of an operating channel of the destination AP.

304. Receive a link quality parameter or a load parameter that is of an operating channel of the destination AP included in the available AP of the candidate STA and an operating channel of the available AP and that is fed back by the candidate STA.

In this embodiment of the present invention, after receiving the parameter feedback request, the candidate STA acquires a link quality parameter or a load parameter of each operating channel of the destination AP, and feeds back the acquired link quality parameter or load parameter of the operating channel of the destination AP to the source AP. The source AP receives the link quality parameter or the load parameter that is of the operating channel of the destination AP of the candidate STA and that is fed back by the determined candidate STA.

The link quality parameter may be a channel quality indicator (Channel Quality Indicator, CQI) or a signal to interference plus noise ratio (Signal to Interference plus Noise Ratio, SINR). For example, the CQI is used as an example. If a STA1 is the candidate STA, operating channels between the destination AP and the STA1 include Ch₁ and Ch₂, the STA1 marks a CQI that is obtained by measuring the operating channel Ch₁ and that is between the STA1 and the destination AP as CQI-1, marks a CQI that is obtained by measuring the operating channel Ch₂ and that is between the STA1 and the destination AP as CQI-2, and sends the CQI-1 of the operating channel Ch₁ and the CQI-2 of the operating channel Ch₂ to the source AP.

305. Determine an operating channel having a maximum link quality parameter or a minimum load parameter in the operating channel of the destination AP of the candidate STA as an optimal operating channel, and determine a candidate STA including the optimal operating channel as a relay STA.

In this embodiment of the present invention, the source AP determines the operating channel having the maximum link quality parameter or the minimum load parameter in the operating channel of the destination AP of the candidate STA as the optimal operating channel, and determines the candidate STA including the optimal operating channel as the relay STA. For example, if candidate STAs include a STA1 and a STA2, operating channels of the STA1 include a channel 1 and a channel 2, and operating channels of the STA2 include a channel 3 and a channel 4, an operating channel having a maximum link quality parameter or a minimum load parameter is selected from the channel 1, the channel 2, the channel 3, and the channel 4 as an optimal operating channel; and if the channel 2 is the optimal operating channel, the STA1 including the channel 2 is determined as the relay STA.

It should be noted that in this embodiment of the present invention, when the source AP determines an operating channel having a maximum link quality parameter as an optimal operating channel, if there are at least two operating channels having a same maximum link quality parameter, any operating channel having the maximum link quality parameter may be selected randomly as the optimal operating channel, or an operating channel having a minimum load parameter is selected from the at least two operating channels having the same maximum link parameter quality as the operating channel having the maximum link quality parameter; and when the source AP determines an operating channel having a minimum load parameter as an optimal operating channel, if there are at least two operating channels having a same minimum load parameter, any operating channel having the minimum load parameter may be selected randomly as the optimal operating channel, or an operating channel having a maximum link quality parameter is selected from the at least two operating channels having the same minimum load parameter as the optimal operating channel.

306. The source AP sends a relay request message to the relay STA, where the relay request message includes the destination AP, or the relay request message includes the destination AP and the optimal operating channel.

In this embodiment of the present invention, after determining the relay STA, the source AP sends the relay request message to the relay STA, where the relay request message includes the destination AP, or the relay request message includes the destination AP and the optimal operating channel, and the optimal operating channel is used by the relay STA to send data from the source AP to the destination AP.

It should be noted that in this embodiment of the present invention, a channel used by the source AP to send the relay request message and a parameter feedback message to the relay STA is a fixed operating channel of the source AP, where the fixed operating channel is a channel used by the source AP to establish a BSS.

It should be noted that the relay request message may further include the data from the source AP, that is, when sending the relay request message to the relay STA, the source AP adds data that needs to be sent to the destination AP to the relay request message. Alternatively, the relay request message does not include the data from the source AP; the source AP sends data to the relay STA after receiving a relay response message fed back by the relay STA, where the data is data that needs to be sent by the source AP to the destination AP, and the relay response message may be used to determine that the relay STA receives the relay request message, or used to determine that the relay STA is determined as the relay STA to send the data to the destination AP.

In this embodiment of the present invention, after a source AP receives available APs of all STAs having association relationships with the source AP, and operating channels of the available APs, where the available APs and the operating channels of the available APs are sent by the STAs, the source AP determines a candidate STA based on the received available APs of the STAs and the received operating channels of the available APs, acquires a link quality parameter or a load parameter of an operating channel of a destination AP of the candidate STA by sending a parameter feedback request to the candidate STA, and determines an operating channel having a maximum link quality parameter or a minimum load parameter in the operating channel of the destination AP of the candidate STA as an optimal operating channel and determines a candidate STA including the optimal operating channel as a relay STA, so that the source AP can send data to the destination AP by using the relay STA. Therefore, data exchange between the APs can be implemented effectively, particularly data exchange between APs that are connected in a non-wired manner in a dense deployment scenario or need to perform wireless information transmission in a dense deployment scenario.

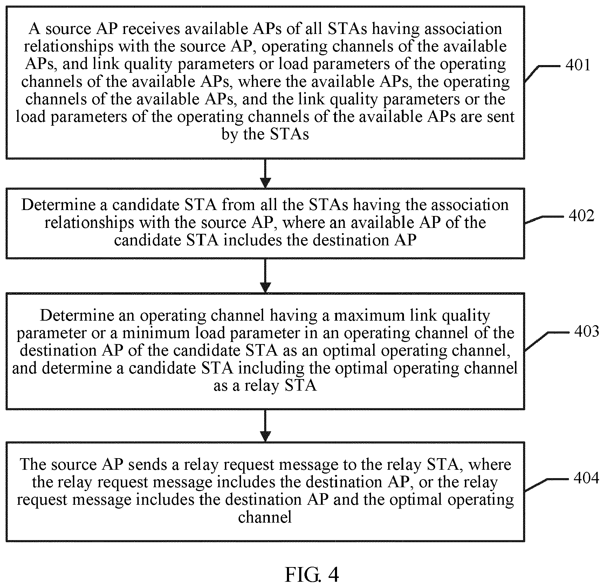

In the embodiment shown in FIG. 3, the technical solution in which a source AP acquires a link quality parameter or a load parameter of an operating channel of a destination AP by sending a parameter feedback request to determine a relay STA and perform data exchange is described. The following further describes a technical solution in which a link quality parameter or a load parameter of an operating channel of an available AP of a STA is directly sent to determine a relay STA and perform data exchange. Refer to FIG. 4, which is an embodiment of a method for data exchange between APs in a WiFi system according to an embodiment of the present invention. The method includes the following steps:
401. A source AP receives available APs of all STAs having association relationships with the source AP, operating channels of the available APs, and link quality parameters or load parameters of the operating channels of the available APs, where the available APs, the operating channels of the available APs, and the link quality parameters or the load parameters of the operating channels of the available APs are sent by the STAs.

In this embodiment of the present invention, all the STAs having the association relationships with the source AP may acquire the available APs of the STAs, the operating channels of the available APs, and the link quality parameters or the load parameters of the operating channels of the available APs, where the available APs and the operating channels of the available APs are obtained by the STAs by performing all-channel scanning, the link quality parameters or the load parameters of the operating channels of the available APs are obtained through calculation by the STAs, and the link quality parameters may be CQIs or SINRs.

The source AP may receive the available APs of all the STAs having the association relationships with the source AP, the operating channels of the available APs, and the link quality parameters or the load parameters of the operating channels of the available APs, where the available APs, the operating channels of the available APs, and the link quality parameters or the load parameters of the operating channels of the available APs are sent by the STAs.

It should be noted that in this embodiment of the present invention, a STA may simultaneously send an available AP of the STA, an operating channel of the available AP, and a link quality parameter or a load parameter of the operating channel of the available AP, or may first send an available AP of the STA and an operating channel of the available AP to the source AP and then send a link quality parameter or a load parameter of the operating channel of the available AP to the source AP.

402. Determine a candidate STA from all the STAs having the association relationships with the source AP, where an available AP of the candidate STA includes the destination AP.

In this embodiment of the present invention, after receiving the available APs and the operating channels of the available APs that are sent by all the STAs having the association relationships with the source AP, the source AP may determine a STA of which an available AP includes the destination AP as the candidate STA.

403. Determine an operating channel having a maximum link quality parameter or a minimum load parameter in an operating channel of the destination AP of the candidate STA as an optimal operating channel, and determine a candidate STA including the optimal operating channel as a relay STA.

404. The source AP sends a relay request message to the relay STA, where the relay request message includes the destination AP, or the relay request message includes the destination AP and the optimal operating channel.

In this embodiment of the present invention, step 403 and step 404 are respectively similar to step 305 and step 306 described in the embodiment shown in FIG. 3, and details are not described herein again.

In this embodiment of the present invention, a source AP receives an available AP of a STA, an operating channel of the available AP, and a link quality parameter or a load parameter of the operating channel of the available AP, so that the source AP can determine a relay STA according to the available AP of the STA, the operating channel of the available AP, and the link quality parameter or the load parameter of the operating channel of the available AP, and send a relay request message to the relay STA; and the relay STA sends data from the source AP to a destination AP. Therefore, data exchange between the APs can be implemented effectively, particularly data exchange between APs that are connected in a non-wired manner in a dense deployment scenario or need to perform wireless information transmission in a dense deployment scenario.

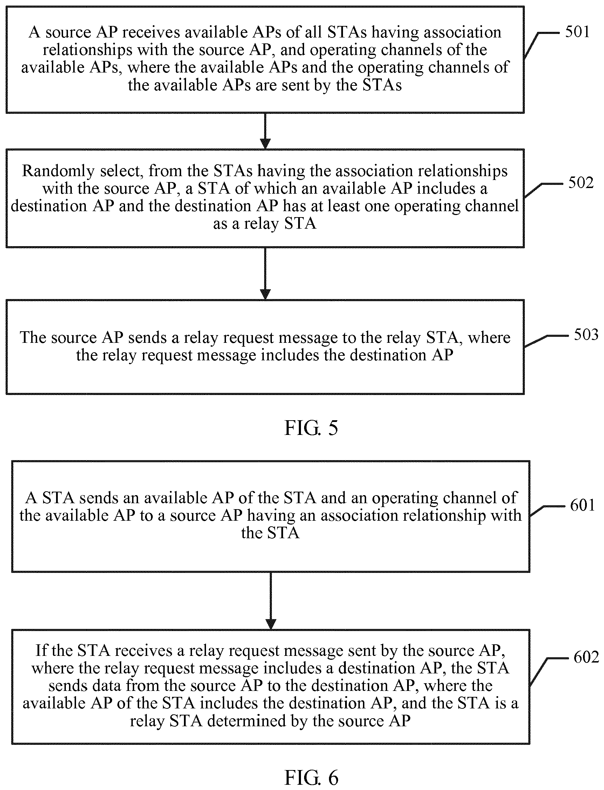

It should be noted that in this embodiment of the present invention, a source AP may further select a relay STA randomly. Refer to FIG. 5, which is an embodiment of a method for data exchange between APs in a WiFi system according to an embodiment of the present invention. The method includes the following steps:
501. A source AP receives available APs of all STAs having association relationships with the source AP, and operating channels of the available APs, where the available APs and the operating channels of the available APs are sent by the STAs.

Content of step 501 is similar to that of step 101 described in the embodiment shown in FIG. 1, and details are not described herein again.

502. Randomly select, from the STAs having the association relationships with the source AP, a STA of which an available AP includes a destination AP and the destination AP has at least one operating channel as a relay STA.

In this embodiment of the present invention, the source AP may determine the relay STA according to the received available APs of the STAs having the association relationships with the source AP available APs and the received operating channels of the available APs, where the available APs and the operating channels of the available APs are sent by the STAs, which may be specifically: randomly selecting, from the STAs having the association relationships with the source AP, the STA of which the available AP includes the destination AP and the destination AP has at least one operating channel as the relay STA, where the destination AP is an AP that needs to perform data exchange with the source AP.

503. The source AP sends a relay request message to the relay STA, where the relay request message includes the destination AP.

In this embodiment of the present invention, fixed operating channels for communication exist between the AP and the STAs having the association relationships with the source AP. After determining the relay STA, the source AP may send the relay request message to the relay STA by using a fixed operating channel between the source AP and the relay STA, where the relay request message includes the destination AP.

It should be noted that the relay request message may further include data from the source AP, that is, when sending the relay request message to the relay STA, the source AP adds data that needs to be sent to the destination AP to the relay request message. Alternatively, the relay request message does not include data from the source AP; the source AP sends data to the relay STA after receiving a relay response message fed back by the relay STA, where the data is data that needs to be sent by the source AP to the destination AP, and the relay response message may be used to determine that the relay STA receives the relay request message, or used to determine that the relay STA is determined as the relay STA to send the data to the destination AP.

In this embodiment of the present invention, after receiving available APs of all STAs having association relationships with a source AP, and operating channels of the available APs, where the available APs and the operating channels of the available APs are sent by the STAs, the source AP may randomly select, from all the STAs having the association relationships with the source AP, a STA of which an available AP includes a destination AP and the destination AP has at least one operating channel as a relay STA, and send data from the source AP to the destination AP by using the relay STA. Therefore, data exchange between the APs can be implemented effectively, particularly data exchange between APs that are connected in a non-wired manner in a dense deployment scenario or need to perform wireless information transmission in a dense deployment scenario.

In the embodiments shown in FIG. 1, FIG. 3, FIG. 4, and FIG. 5, the method for data exchange between APs in a WiFi system is described from a side of a source AP. The following describes a method for data exchange between APs in a WiFi system from a side of a relay STA. Referring to FIG. 6, the method includes the following steps:
601. A STA sends an available AP of the STA and an operating channel of the available AP to a source AP having an association relationship with the STA.

In this embodiment of the present invention, the STA may perform all-channel scanning to obtain the available AP of the source AP and the operating channel of the available AP. The source AP has the association relationship with the STA, and the STA may further send the available AP of the STA and the operating channel of the available AP to the source AP, so that the source AP can determine a relay STA by using the available AP of the STA and the operating channel of the available AP.

It should be noted that in this embodiment of the present invention, the STA may further calculate a link quality parameter or a load parameter of the operating channel, obtained by means of the scanning, of the available AP of the source AP, and send the link quality parameter or the load parameter of the operating channel of the available AP to the source AP. Alternatively, after step 601 is executed, if the STA receives a parameter feedback request sent by the source AP, where the parameter feedback request includes a destination AP, the STA feeds back a link quality parameter or a load parameter of an operating channel of the destination AP of the STA to the source AP, so that the source AP can acquire the link quality parameter or the load parameter of the operating channel of the destination AP of the STA.

602. If the STA receives a relay request message sent by the source AP, where the relay request message includes a destination AP, the STA sends data from the source AP to the destination AP, where the available AP of the STA includes the destination AP, and the STA is a relay STA determined by the source AP.

In this embodiment of the present invention, if the STA receives the relay request message sent by the source AP, the STA is the relay STA determined by the source AP, where the relay request message includes determining the destination AP, and the STA sends the data from the source AP to the destination AP, where the available AP of the STA includes the destination AP.

Before sending the data, the STA may further determine an operating channel for sending the data to the destination AP, which is specifically: The STA randomly selects an operating channel from the operating channel of the available AP of the STA; or if the STA acquires the link quality parameter or the load parameter of the operating channel of the available AP of the STA, the STA selects, from the operating channel of the destination AP of the STA, an operating channel having a maximum link quality parameter or a minimum load parameter. The foregoing step 502 may be specifically sending the data to the destination AP by using the selected operating channel.

A manner of sending, by the STA, the data to the destination AP by using the selected operating channel is further related to whether the destination AP is associated with the STA, which is specifically: If the STA has an association relationship with the destination AP, sending the data from the source AP to the destination AP by using the selected operating channel; or if the STA has no association relationship with the destination AP and the STA can have association relationships with multiple APs, initiating, by the STA, an association operation to the destination AP, and after an association relationship between the STA and the destination AP is established, sending the data from the source AP to the destination AP by using the selected operating channel; or if the STA has no association relationship with the destination AP and the STA can have an association relationship with only one AP, initiating, by the STA, a disassociation operation to the source AP, after the STA is disassociated from the source AP, initiating, by the STA, an association operation to the destination AP, and after an association relationship between the STA and the destination AP is established, sending the data from the source AP to the destination AP by using the selected operating channel; or if the STA has no association relationship with the destination AP, sending a common function frame to the destination AP by using the selected operating channel, where the common function frame carries the data from the source AP.

In this embodiment of the present invention, if the relay request message includes an operating channel that is determined by the source AP and that is used by the STA to send the data to the destination AP, step 502 may be specifically sending, by the STA, the data from the source AP to the destination AP by using the operating channel included in the relay request message.

A manner of sending, by the STA, the data from the source AP to the destination AP by using the operating channel included in the relay request message is related to whether the destination AP is associated with the STA, which is specifically: If the STA has an association relationship with the destination AP, sending the data from the source AP to the destination AP by using the operating channel included in the relay request message; or if the STA has no association relationship with the destination AP and the STA can have association relationships with multiple APs, initiating, by the STA, an association operation to the destination AP, and after an association relationship between the STA and the destination AP is established, sending the data from the source AP to the destination AP by using the operating channel included in the relay request message; or if the STA has no association relationship with the destination AP and the STA can have an association relationship with only one AP, initiating, by the STA, a disassociation operation to the source AP, after the STA is disassociated from the source AP, initiating, by the STA, an association operation to the destination AP, and after an association relationship between the STA and the destination AP is established, sending the data from the source AP to the destination AP by using the operating channel included in the relay request message; or if the STA has no association relationship with the destination AP, sending a common function frame to the destination AP by using the operating channel included in the relay request message, where the common function frame carries the data from the source AP. The disassociation operation includes: The STA may send a disassociation frame to the source AP; and after receiving the disassociation frame, the source AP feeds back a response message to the STA and disassociates from the STA.

The association operation includes: The STA sends an authentication request packet to the destination AP to request an access; the destination AP feeds back an authentication response packet to the STA; after receiving the authentication response packet, the STA sends an association request packet to the destination AP to request an association; and the destination AP determines an association relationship with the STA and feeds back an association response packet to the STA, so as to associate the destination AP with the STA.

It should be noted that the relay request message may further include the data from the source AP, that is, when sending the relay request message to the relay STA, the source AP adds data that needs to be sent to the destination AP to the relay request message. Alternatively, the relay request message does not include the data from the source AP; the source AP sends data to the relay STA after receiving a relay response message fed back by the relay STA, where the data is data that needs to be sent by the source AP to the destination AP, and the relay response message may be used to determine that the relay STA receives the relay request message, or used to determine that the relay STA is determined as the relay STA to send the data to the destination AP.

In this embodiment of the present invention, after the STA sends the data from the source AP to the destination AP, the STA may receive a data exchange result fed back by the destination AP. If the STA has the association relationship with the source AP, the STA feeds back the data exchange result to the source AP. If the STA has no association relationship with the source AP, which indicates that the STA can have an association relationship with only one AP, the STA initiates a disassociation operation to the destination AP, after the STA is disassociated from the destination AP, initiates an association operation to the source AP, and after an association relationship is established with the source AP, sends the data exchange result to the source AP. Alternatively, the STA sends the data exchange result to the source AP by using a common function frame, where the data exchange result is carried in the common function frame.

It should be noted that in a case in which a STA is not associated with an AP, a common function frame may be used for data transmission between the STA and the AP. In a case in which the STA has the association relationship with the destination AP, the STA uses an ordinary data frame when sending the data to the destination AP by using the determined operating channel.

In this embodiment of the present invention, a STA sends an available AP of the STA and an operating channel of the available AP to a source AP having an association relationship with the STA, where the available AP of the STA and the operating channel of the available AP are used by the source AP to determine a relay STA; and if the STA receives a relay request message sent by the source AP, the STA is the relay STA determined by the source AP, and the STA sends data from the source AP to a destination AP. Therefore, data exchange between the source AP and the destination AP can be performed effectively, particularly data exchange between APs that are connected in a non-wired manner in a dense deployment scenario or need to perform wireless information transmission in a dense deployment scenario.

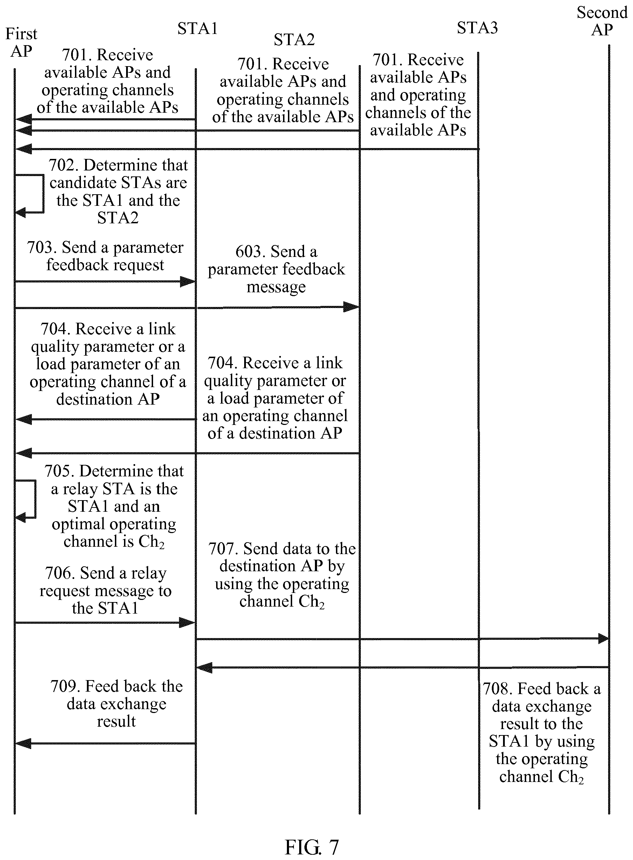

For better understanding of the technical solutions in the embodiments of the present invention, the following uses a specific application scenario to describe a process of data exchange among a source AP, a destination AP, and a STA1. Referring to FIG. 7, in the exchange process, the source AP determines a relay STA according to a link quality parameter or a load parameter. The exchange process includes the following steps:
701. The source AP separately receives available APs and operating channels of the available APs that are sent by the STA1, a STA2, and a STA3.

The STA1, the STA2, and the STA3 are STAs having association relationships with the source AP, and may periodically feed back the obtained available APs of the STAs and the obtained operating channels of the available APs to the source AP.

It should be noted that the source AP may simultaneously receive the available APs and the operating channels of the available APs that are sent by the STA1, the STA2, and the STA3, or may non-simultaneously receive the available APs and the operating channels of the available APs that are sent by the STA1, the STA2, and the STA3. Therefore, a time sequence of receiving the available APs and the operating channels of the available APs is not limited.

702. The source AP determines, according to the received available APs and operating channels of the available APs, that candidate STAs are the STA1 and the STA2.

After receiving the available APs and the operating channels of the available APs that are sent by the STA1, the STA2, and the STA3 that have the association relationships with the source AP, the source AP determines a candidate STA by using the available APs of the STA1, the STA2, and the STA3 and the operating channels of the available APs. The candidate STA is a STA of which an available AP includes the destination AP that needs to perform data exchange with the source AP. In this application scenario, that the candidate STAs are the STA1 and the STA2 is used as an example.

703. The source AP sends a parameter feedback request to the STA1 and the STA2.

704. The source AP receives a link quality parameter or a load parameter that is of an operating channel of the destination AP of the STA1 and that is fed back by the STA1, and receives a link quality parameter or a load parameter that is of an operating channel of the destination AP of the STA2 and that is fed back by the STA2.

In this embodiment of the present invention, the source AP may send the parameter feedback request to the STA1 and the STA2, where the parameter feedback request includes the destination AP. After receiving the parameter feedback request, the STA1 feeds back, to the source AP, the link quality parameter or the load parameter that is of the operating channel of the destination AP of the STA1 and that is obtained through calculation. After receiving the parameter feedback request, the STA2 feeds back, to the source AP, the link quality parameter or the load parameter that is of the operating channel of the destination AP of the STA2 and that is obtained through calculation.

It should be noted that the source AP may simultaneously send the parameter feedback request to the STA1 and the STA2, or may non-simultaneously send the parameter feedback request. Therefore, a time sequence of sending the parameter feedback request is not limited, and a time sequence of receiving, by the source AP, the link quality parameters or the load parameters fed back by the STA1 and the STA2 is also not limited.

705. The source AP determines that a relay STA is the STA1 and an optimal operating channel is Ch₂.

After receiving the link quality parameters or the load parameters that are of the available channels of the destination AP and that are fed back by the STA1 and the STA2, the source AP determines an operating channel having a maximum link quality parameter or a minimum load parameter in the operating channels of the destination AP of the candidate STA1 and STA2 as an optimal operating channel, and determines a candidate STA including the optimal operating channel as a relay STA. In this application scenario, it is determined that the STA1 is the relay STA1, and the optimal operating channel is Ch₂.

706. The source AP sends a relay request message to the STA1, where the relay request message includes the destination AP, data sent by the source AP to the destination AP, and the operating channel Ch₂.

707. The STA1 sends the data to the destination AP by using the operating channel Ch₂.

708. The destination AP feeds back a data exchange result to the STA1 by using the operating channel Ch₂.

709. The STA1 feeds back the data exchange result to the source AP.

The source AP sends the relay request message to the STA1, where the relay request message includes the destination AP, the data sent by the source AP to the destination AP, the operating channel Ch₂, and the operating channel Ch₂ is the operating channel that is determined by the source AP and that is used by the STA1 to send the data to the destination AP.

After receiving the relay request message, the STA1 sends the data to the destination AP by using the operating channel Ch₂ included in the relay request message. After processing the received data, the destination AP feeds back the data exchange result to the STA1; and the STA1 feeds back the received data exchange result to the source AP.

In this embodiment of the present invention, a relay STA is determined, and the relay STA is used to implement data exchange between a source AP and a destination AP. Therefore, the data exchange between the APs can be implemented effectively, particularly data exchange between APs that are connected in a non-wired manner in a dense deployment scenario or need to perform wireless information transmission in a dense deployment scenario.

It should be noted that in the embodiments shown in FIG. 1 and FIG. 3 to FIG. 7, a relay STA is used to implement data exchange between a source AP and a destination AP. In an actual application, if a source AP and a destination AP perform operations on a same channel, that is, an operating channel is totally or partially the same, and the source AP and the destination AP can receive signals from each other, a relay STA may not be used, and the source AP and the destination AP may use the same operating channel to perform data transmission. In this case, the operating channel is a channel used by an AP to establish a BSS.

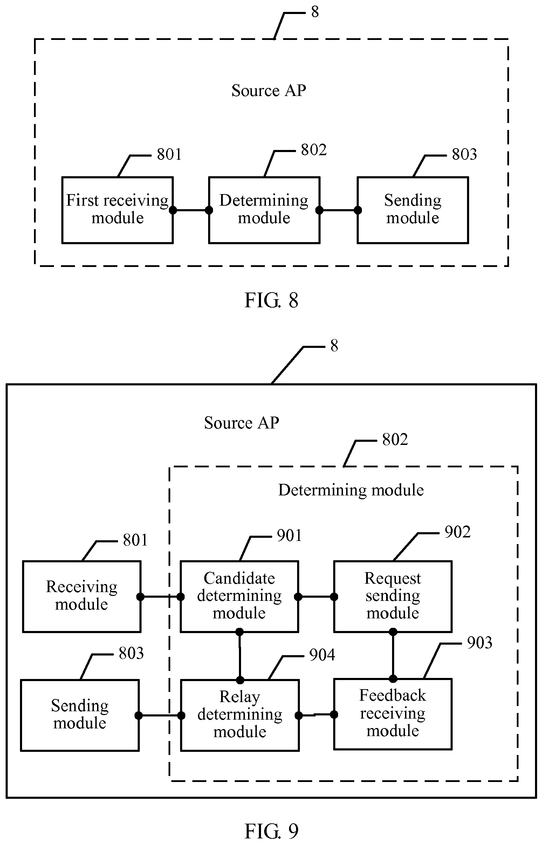

Refer to FIG. 8, which is an embodiment of a structure of an AP according to an embodiment of the present invention. For ease of description, that the AP is a source AP 8 that needs to send data to a destination AP is used as an example herein, where the source AP 8 includes:
a receiving module 801, configured to receive available APs of all stations STAs having association relationships with the source AP, and operating channels of the available APs, where the available APs and the operating channels of the available APs are sent by the STAs;
a determining module 802, configured to: after the receiving module 801 receives the available APs of the STAs and the operating channels of the available APs, determine a relay STA according to the available APs of the STAs and the operating channels of the available APs, where an available AP of the relay STA includes the destination AP that needs to perform data exchange with the source AP 8; and
a sending module 803, configured to: after the determining module 802 determines the relay STA, send a relay request message to the relay STA, where the relay request message includes the destination AP, so that the relay STA sends data from the source AP 8 to the destination AP after receiving the relay request message, so as to perform the data exchange between the source AP 8 and the destination AP.

In this embodiment of the present invention, the receiving module 801 in the source AP 8 receives the available APs of all the stations STAs having the association relationships with the source AP 8, and the operating channels of the available APs, where the available APs and the operating channels of the available APs are sent by the STAs; then the determining module 802 determines the relay STA according to the available APs of the STAs and the operating channels of the available APs, where the available AP of the relay STA includes the destination AP that needs to perform the data exchange with the source AP 8; and the sending module 803 sends the relay request message to the relay STA, where the relay request message includes the destination AP, so that the relay STA sends the data from the source AP 8 to the destination AP after receiving the relay request message, so as to perform the data exchange between the source AP 8 and the destination AP.

In this embodiment of the present invention, a source AP 8 receives available APs of all STAs having association relationships with the source AP 8, and operating channels of the available APs, the source AP 8 may determine a relay STA according to the available APs of the STAs and the operating channels of the available APs, and the source AP 8 sends a relay request message to the relay STA, so that relay STA sends data from the source AP 8 to a destination AP after receiving the relay request message, so as to perform data exchange between the source AP 8 and the destination AP. The relay STA is used to receive the relay request message sent by the source AP 8, so that the relay STA can send the data of the source AP 8 to the destination AP. Therefore, the data exchange between the APs can be implemented effectively, particularly data exchange between APs that are connected in a non-wired manner in a dense deployment scenario or need to perform wireless information transmission in a dense deployment scenario.

For better understanding of a structure of a source AP 8 according to an embodiment of the present invention, refer to FIG. 9. The source AP 8 includes:
a receiving module 801, a determining module 802, and a sending module 803 as described in the embodiment shown in FIG. 8, where content thereof is similar to the content described in the embodiment shown in FIG. 8, and details are not described herein again.

In this embodiment of the present invention, the determining module 802 includes:
a candidate determining module 901, configured to: after the receiving module 801 receives available APs of all STAs having association relationships with the source AP 8, and operating channels of the available APs, where the available APs and the operating channels of the available APs are sent by the STAs, determine a STA, in the STAs having the association relationships with the source AP 8, of which an available AP includes the destination AP as a candidate STA;
a request sending module 902, configured to: after the candidate determining module 901 determines the candidate STA, send a parameter feedback request to the candidate STA, where the parameter feedback request includes the destination AP;
a feedback receiving module 903, configured to: after the request sending module 902 sends the parameter feedback request, receive a link quality parameter or a load parameter that is of an operating channel of the destination AP of the candidate STA and that is fed back by the candidate STA; and
a relay determining module 904, configured to: after the feedback receiving module 903, determine an operating channel having a maximum link quality parameter or a minimum load parameter in the operating channel of the destination AP of the candidate STA as an optimal operating channel, and determine a candidate STA including the optimal operating channel as a relay STA.

In this embodiment of the present invention, the receiving module 801 is further configured to directly receive link quality parameters or load parameters that are of the operating channels of the available APs of all the STAs having the association relationships with the source AP 8 and that are sent by the STAs, and
the relay determining module 904 in the determining module 802 is further configured to: after the candidate determining module 901 determines the candidate STA, determine an operating channel having a maximum link quality parameter or a minimum load parameter in an operating channel of the destination AP of the candidate STA as an optimal operating channel, and determine a candidate STA including the optimal operating channel as a relay STA.

In this embodiment of the present invention, the relay request message further includes the optimal operating channel, where the optimal operating channel is an operating channel used by the relay STA when the relay STA sends the data to the destination AP.

Alternatively, in this embodiment of the present invention, the determining module 802 is specifically configured to: after the receiving module 801 receives available APs of all STAs having association relationships with the source AP 8, and operating channels of the available APs, where the available APs and the operating channels of the available APs are sent by the STAs, randomly select, from the STAs having the association relationships with the source AP 8, a STA that can include a destination AP and of which the destination AP has at least one operating channel as a relay STA, where the destination AP is an AP that needs to perform data exchange with the source AP 8.

It should be noted that in this embodiment of the present invention, the relay request message further includes data from the source AP 8. Alternatively, the sending module 804 is further configured to: after the receiving module 801 receives a relay response message fed back by the relay STA, send data to the relay STA.

In this embodiment of the present invention, the receiving module 801 in the source AP 8 receives the available APs of all the stations STAs having the association relationships with the source AP 8, and the operating channels of the available APs, where the available APs and the operating channels of the available APs are sent by the STAs; then the candidate determining module 901 in the determining module 802 determines the STA, in the STAs having the association relationships with the source AP 8, of which the available AP includes the destination AP as the candidate STA; then the request sending module 902 sends the parameter feedback request to the candidate STA, where the parameter feedback request includes the destination AP; the feedback receiving module 903 receives the link quality parameter or the load parameter that is of the operating channel of the destination AP of the candidate STA and that is fed back by the candidate STA; and finally, the relay determining module 904 determines the operating channel having the maximum link quality parameter or the minimum load parameter in the operating channel of the destination AP of the candidate STA as the optimal operating channel, and determines the candidate STA including the optimal operating channel as the relay STA. Then the sending module 803 sends the relay request message to the relay STA, so that the relay STA sends the data from the source AP 8 to the destination AP after receiving the relay request message, so as to perform data exchange between the source AP 8 and the destination AP.

Alternatively, after the receiving module 801 receives the available APs of the STAs and the operating channels of the available APs, the receiving module 801 further receives the link quality parameters or the load parameters of the operating channels of the available APs; the candidate determining module 901 in the determining module 802 determines the STA, in the STAs having the association relationships with the source AP 8, of which the available AP includes the destination AP as the candidate STA; the relay determining module 904 determines the operating channel having the maximum link quality parameter or the minimum load parameter in the operating channel of the destination AP of the candidate STA as the optimal operating channel, and determines the candidate STA including the optimal operating channel as the relay STA; and then the sending module 803 sends the relay request message to the relay STA, so that the relay STA sends the data from the source AP 8 to the destination AP after receiving the relay request message, so as to perform data exchange between the source AP 8 and the destination AP.

Alternatively, after the receiving module 801 receives the available APs of the STAs and the operating channels of the available APs, the determining module 802 randomly selects, from the STAs having the association relationships with the source AP 8, the STA of which an available AP includes the destination AP and the destination AP has at least one operating channel as the relay STA, where the destination AP is the AP that needs to perform the data exchange with the source AP 8; and then the sending module 803 sends the relay request message to the relay STA, so that the relay STA sends the data from the source AP 8 to the destination AP after receiving the relay request message, so as to perform the data exchange between the source AP 8 and the destination AP.

In this embodiment of the present invention, after a source AP 8 receives available APs of all STAs having association relationships with the source AP 8, and operating channels of the available APs, where the available APs and the operating channels of the available APs are sent by the STAs, the source AP 8 determines a relay STA according to the available APs of the STAs and the operating channels of the available APs, and sends a relay request message to the relay STA; and the relay STA sends data from the source AP 8 to a destination AP. Therefore, data exchange between the APs can be implemented effectively, particularly data exchange between APs that are connected in a non-wired manner in a dense deployment scenario or need to perform wireless information transmission in a dense deployment scenario.

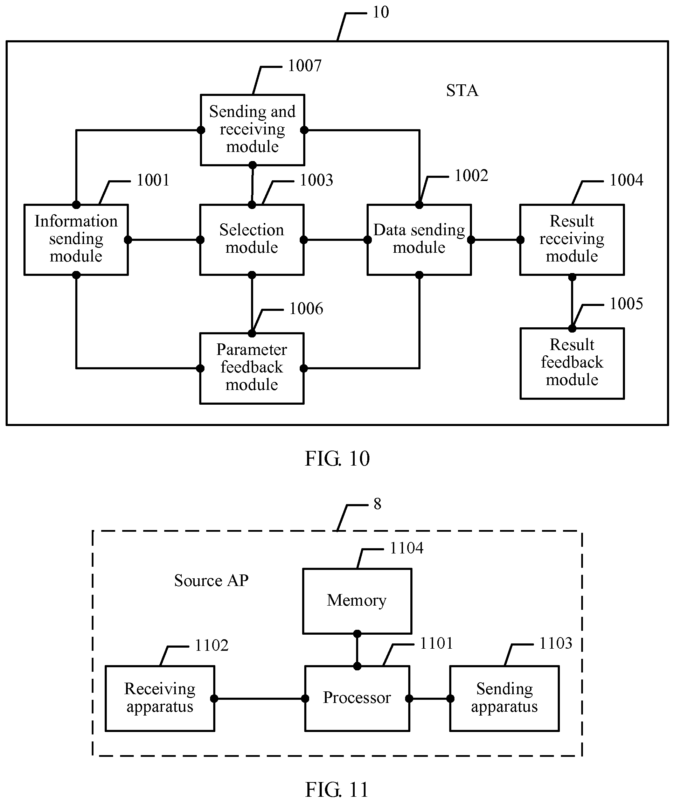

Refer to FIG. 10, which is an embodiment of a structure of a STA 10 according to an embodiment of the present invention, where the STA 10 includes:
an information sending module 1001, configured to send an available AP of the STA 10 and an operating channel of the available AP to a source AP having an association relationship with the STA 10; and
a data sending module 1002, configured to: after the information sending module 1001 sends the available AP of the STA 10 and the operating channel of the available AP, if the STA 10 receives a relay request message sent by the source AP, where the relay request message includes a destination AP, send data from the source AP to the destination AP, where the available AP of the STA 10 includes the destination AP, and the STA 10 is a relay STA determined by the source AP.

In this embodiment of the present invention, the STA further includes:
a selection module 1003, configured to: before the data sending module 1002 sends the data from the source AP, randomly select an operating channel from an operating channel of the destination AP of the STA 10; or if the STA 10 has acquired a link quality parameter or a load parameter of the operating channel of the available AP of the STA 10, select, by STA 10, from an operating channel of the destination AP of the STA 10, an operating channel having a maximum link quality parameter or a minimum load parameter.

The data sending module 1002 is configured to send the data to the destination AP by using the selected operating channel.

In this embodiment of the present invention, the data sending module 1002 is specifically configured to: if the STA 10 has an association relationship with the destination AP, send the data from the source AP to the destination AP by directly using the selected operating channel; or if the STA 10 has no association relationship with the destination AP and the STA 10 can have association relationships with multiple APs, initiate, by the data sending module 1002, an association operation to the destination AP, and after an association relationship between the STA and the destination AP is established, send the data from the source AP to the destination AP by using the selected operating channel; or if the STA has no association relationship with the destination AP and the STA 10 can have an association relationship with only one AP, initiate, by the data sending module 1002, a disassociation operation to the source AP, after the STA is disassociated from the source AP, initiate an association operation to the destination AP, and after an association relationship between the STA and the destination AP is established, send the data from the source AP to the destination AP by using the selected operating channel; or if the STA has no association relationship with the destination AP, send a common function frame to the destination AP by using the selected operating channel, where the common function frame carries the data from the source AP.

In this embodiment of the present invention, if the relay request message further includes an operating channel used by the STA to send the data to the destination AP,
the data sending module 1002 is specifically configured to:
if the STA 10 has an association relationship with the destination AP, send the data from the source AP to the destination AP by directly using the operating channel included in the relay request message; or if the STA has no association relationship with the destination AP and the STA can have association relationships with multiple APs, initiate an association operation to the destination AP, and after an association relationship between the STA 10 and the destination AP is established, send the data from the source AP to the destination AP by using the operating channel included in the relay request message; or if the STA 10 has no association relationship with the destination AP and the STA can have an association relationship with only one AP, initiate a disassociation operation to the source AP, after the STA is disassociated from the source AP, initiate, by the data sending module 1002, an association operation to the destination AP, and after an association relationship between the STA and the destination AP is established, send the data from the source AP to the destination AP by using the operating channel included in the relay request message; or if the STA 10 has no association relationship with the destination AP, send a common function frame to the destination AP by using the operating channel included in the relay request message, where the common function frame carries the data from the source AP.

In this embodiment of the present invention, the STA 10 further includes:
a result receiving module 1004, configured to: after the data sending module 1002 sends the data, receive a data exchange result fed back by the destination AP; and
a result feedback module 1005, configured to: after the result receiving module 1004 receives the data exchange result, if the STA 10 has the association relationship with the source AP, feed back the data exchange result to the source AP; or if the STA 10 has no association relationship with the source AP, initiate a disassociation operation to the destination AP, after the STA 10 is disassociated from the destination AP, initiate an association operation to the source AP, and after an association relationship between the STA and the source AP is established, send the data exchange result to the source AP; or if the STA has no association relationship with the source AP, send the data exchange result to the source AP by using a common function frame.

In this embodiment of the present invention, the STA 10 further includes:
a parameter feedback module 1006, configured to: after the information sending module 1001 sends the available AP of the STA 10 and the operating channel of the available AP, if the STA 10 receives a parameter feedback request sent by the source AP, feed back a link quality parameter or a load parameter of the operating channel of the destination AP of the STA to the source AP, where the feedback request message includes the destination AP.

In this embodiment of the present invention, the relay request message further includes the data from the source AP. Alternatively, the STA further includes:
a sending and receiving module 1007, configured to: after the STA 10 receives the relay request message sent by the source AP, send a relay response message to the source AP, and receive data sent by the source AP.

In this embodiment of the present invention, the information sending module 1001 in the STA 10 sends the available AP of the STA and the operating channel of the available AP to the source AP having the association relationship with the STA 10; if the STA 10 receives the parameter feedback request sent by the source AP, the parameter feedback module 1006 feeds back the link quality parameter or the load parameter of the operating channel of the destination AP of the STA 10 to the source AP, where the feedback request message includes the destination AP; then the selection module randomly selects the operating channel from the operating channel of the destination AP of the STA 104; or if the STA 10 has acquired the link quality parameter or the load parameter of the operating channel of the destination AP, the STA 10 selects, from the operating channel of the destination AP of the STA 10, the operating channel having the maximum link quality parameter or the minimum load parameter; and finally, the data sending module 1002 sends the data from the source AP to the destination AP, which may be specifically: If the STA 10 has the association relationship with the destination AP, the data sending module 1002 sends the data from the source AP to the destination AP by directly using the selected operating channel; or if the STA has no association relationship with the destination AP and the STA 10 can have the association relationships with multiple APs, the data sending module 1002 the STA 10 initiates the association operation to the destination AP, and after the association relationship between the STA 10 and the destination AP is established, sends the data from the source AP to the destination AP by using the selected operating channel; or if the STA 10 has no association relationship with the destination AP and the STA 10 can have the association relationship with only one AP, the data sending module 1002 the STA 10 initiates the disassociation operation to the source AP, after the STA is disassociated from the source AP, initiates, by the STA 10, the association operation to the destination AP, and after the association relationship between the STA 10 and the destination AP is established, sends the data from the source AP to the destination AP by using the selected operating channel; or if the STA 10 has no association relationship with the destination AP, the data sending module 1002 sends the common function frame to the destination AP by using the selected operating channel, where the common function frame carries the data from the source AP.

Alternatively, if the relay request message further includes the operating channel used by the STA 10 to send the data to the destination AP, after the STA 10 receives the relay request message sent by the source AP, the data sending module 1002 is specifically configured to: if the STA 10 has the association relationship with the destination AP, send the data from the source AP to the destination AP by directly using the operating channel included in the relay request message; or if the STA 10 has no association relationship with the destination AP and the STA can have the association relationships with multiple APs, initiate the association operation to the destination AP, and after the association relationship between the STA and the destination AP is established, send the data from the source AP to the destination AP by using the operating channel included in the relay request message; or if the STA 10 has no association relationship with the destination AP and the STA 10 can have the association relationship with only one AP, initiate the disassociation operation to the source AP, after the STA 10 is disassociated from the source AP, initiate the association operation to the destination AP, and after the association relationship between the STA 10 and the destination AP is established, send the data from the source AP to the destination AP by using the operating channel included in the relay request message; or if the STA 10 has no association relationship with the destination AP, send the common function frame to the destination AP by using the operating channel included in the relay request message, where the common function frame carries the data from the source AP. After the data sending module 1002 sends the data to the destination AP, the result receiving module 1004 receives the data exchange result fed back by the destination AP. If the STA has the association relationship with the source AP, the result feedback module 1005 feeds back the data exchange result to the source AP; or if the STA 10 has no association relationship with the source AP, the result feedback module 1005 initiates the disassociation operation to the destination AP, after the STA 10 is disassociated from the destination AP, initiates the association operation to the source AP, and after the association relationship between the STA 10 and the source AP is established, sends the data exchange result to the source AP; or if the STA 10 has no association relationship with the source AP, the result feedback module 1005 sends the data exchange result to the source AP by using the common function frame.

In this embodiment of the present invention, a STA 10 sends an available AP of the STA and an operating channel of the available AP to a source AP having an association relationship with the STA 10; and if the STA 10 receives a relay request message sent by the source AP, the STA 10 is a relay STA determined by the source AP, where the relay request message includes a destination AP, and the STA 10 sends data from the source AP to the destination AP. Therefore, data exchange between the source AP and the destination AP can be performed effectively, particularly data exchange between APs that are connected in a non-wired manner in a dense deployment scenario or need to perform wireless information transmission in a dense deployment scenario.

Refer to FIG. 11, which is another embodiment of a structure of an AP according to an embodiment of the present invention. A source AP 8 is used as an example, where the source AP 8 includes:
a processor 1101, a receiving apparatus 1102, a sending apparatus 1103, and a memory 1104.

The receiving apparatus 1102 is configured to receive available APs of all stations STAs having association relationships with the source AP 8, and operating channels of the available APs, where the available APs and the operating channels of the available APs are sent by the STAs. The processor 1101 is configured to determine a relay STA according to the available APs of the STAs and the operating channels of the available APs, where an available AP of the relay STA includes a destination AP that needs to perform data exchange with the source AP 8.

The sending apparatus 1103 is configured to send a relay request message to the relay STA, where the relay request message includes the destination AP, so that the relay STA sends data from the source AP 8 to the destination AP after receiving the relay request message, so as to perform the data exchange between the source AP 8 and the destination AP.

The memory 1104 is configured to store the received available APs of the STAs and the received operating channels of the available APs.

The processor 1101 is further configured to determine a candidate STA from all the STAs having the association relationships with the source AP, where an available AP of the candidate STA includes the destination AP. The sending apparatus 1103 is further configured to send a parameter feedback request to the candidate STA, where the parameter feedback request includes the destination AP. The receiving apparatus 1102 is further configured to receive a link quality parameter or a load parameter that is of an operating channel of the destination AP in the available AP of the candidate STA and that is fed back by the candidate STA. The processor 1101 is further configured to determine an operating channel having a maximum link quality parameter or a minimum load parameter in the operating channel of the destination AP of the candidate STA as an optimal operating channel, and determine a candidate STA including the optimal operating channel as the relay STA.

If the receiving apparatus 1102 is further configured to directly receive link quality parameters or load parameters that are of the operating channels of the available APs of all the STAs having the association relationships with the source AP and that are sent by the STAs, the processor 1101 is further configured to: determine a candidate STA from all the STAs having the association relationships with the source AP, where an available AP of the candidate STA includes the destination AP, determine an operating channel having a maximum link quality parameter or a minimum load parameter in an operating channel of the destination AP of the candidate STA as an optimal operating channel, and determine a candidate STA including the optimal operating channel as the relay STA.

In this embodiment of the present invention, the relay request message further includes the optimal operating channel, where the optimal operating channel is an operating channel used by the relay STA when the relay STA sends the data from the source AP to the destination AP.

The processor 1101 is further configured to randomly select, from all the STAs having the association relationships with the source AP, a STA of which an available AP includes the destination AP and the destination AP has at least one operating channel as the relay STA.

In this embodiment of the present invention, the relay request message further includes the data from the source AP. Alternatively, the sending apparatus 1203 is further configured to: after the receiving apparatus 1102 receives a relay response message fed back by the relay STA, send data to the relay STA.

In this embodiment of the present invention, a source AP 8 receives available APs of all STAs having association relationships with the source AP 8, and operating channels of the available APs, the source AP 8 may determine a relay STA according to the available APs of the STAs and the operating channels of the available APs, and the source AP 8 sends a relay request message to the relay STA, so that relay STA sends data from the source AP 8 to a destination AP after receiving the relay request message, so as to perform data exchange between the source AP 8 and the destination AP. The relay STA is used to receive the relay request message sent by the source AP 8, so that the relay STA can send the data of the source AP 8 to the destination AP. Therefore, the data exchange between the APs can be implemented effectively, particularly data exchange between APs that are connected in a non-wired manner in a dense deployment scenario or need to perform wireless information transmission in a dense deployment scenario.

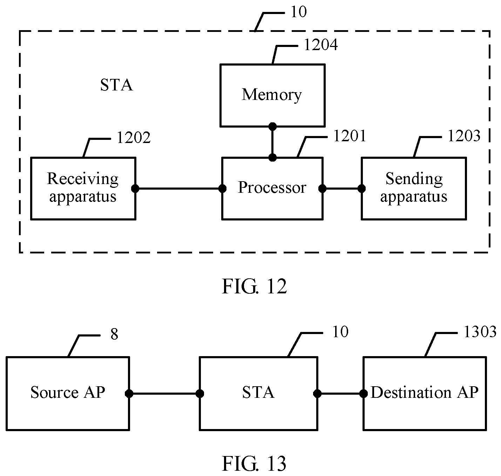

Refer to FIG. 12, which is another schematic diagram of a structure of a STA 10 according to an embodiment of the present invention, where the STA 10 includes:
a processor 1201, a receiving apparatus 1202, a sending apparatus 1203, and a memory 1204.

The sending apparatus 1203 is configured to send an available AP of the STA 10 and an operating channel of the available AP to a source AP having an association relationship with the STA 10, and is configured to: after sending the available AP of the STA and the operating channel of the available AP, if the receiving apparatus 1202 receives a relay request message sent by the source AP, where the relay request message includes a destination AP, send, by the STA 10, the data to the destination AP, where the available AP in the available AP of the STA 10 and the operating channel of the available AP includes the destination AP, and the STA 10 is a relay STA determined by the source AP.

The processor 1201 is configured to: randomly select an operating channel from an operating channel of the destination AP of the STA 10; or if the STA 10 has acquired a link quality parameter or a load parameter of the operating channel of the available AP of the STA 10, select, by the STA 10, from an operating channel of the destination AP of the STA, an operating channel having a maximum link quality parameter or a minimum load parameter.

The sending apparatus 1203 is configured to: if the STA has an association relationship with the destination AP, send the data from the source AP to the destination AP by directly using the selected operating channel; or if the STA has no association relationship with the destination AP and the STA can have association relationships with multiple APs, initiate, by the STA, an association operation to the destination AP, and after an association relationship between the STA and the destination AP is established, send the data from the source AP to the destination AP by using the selected operating channel; or if the STA has no association relationship with the destination AP and the STA can have an association relationship with only one AP, initiate, by the STA, a disassociation operation to the source AP, after the STA is disassociated from the source AP, initiate, by the STA, an association operation to the destination AP, and after an association relationship between the STA and the destination AP is established, send the data from the source AP to the destination AP by using the selected operating channel; or if the STA has no association relationship with the destination AP, send a common function frame to the destination AP by using the selected operating channel, where the common function frame carries the data from the source AP.

Alternatively, the relay request message further includes an operating channel used by the STA 10 when the STA 10 sends data from the source AP to the destination AP. The sending apparatus 1203 is configured to: if the STA has an association relationship with the destination AP, send the data from the source AP to the destination AP by directly using the operating channel included in the relay request message; or if the STA has no association relationship with the destination AP and the STA can have association relationships with multiple APs, initiate, by the STA, an association operation to the destination AP, and after an association relationship between the STA and the destination AP is established, send the data from the source AP to the destination AP by using the operating channel included in the relay request message; or if the STA has no association relationship with the destination AP and the STA can have an association relationship with only one AP, initiate, by the STA, a disassociation operation to the source AP, after the STA is disassociated from the source AP, initiate, by the STA, an association operation to the destination AP, and after an association relationship between the STA and the destination AP is established, send the data from the source AP to the destination AP by using the operating channel included in the relay request message; or if the STA has no association relationship with the destination AP, send a common function frame to the destination AP by using the operating channel included in the relay request message, where the common function frame carries the data from the source AP.

The relay request message further includes the data from the source AP. Alternatively, the sending apparatus 1202 is configured to: after the STA receives the relay request message sent by the source AP, send a relay response message to the source AP; and the receiving apparatus 1203 is further configured to receive data sent by the source AP.

The receiving apparatus 1203 is further configured to: after the data sending module 1202 sends the data, receive a data exchange result fed back by the destination AP.

The sending module 1202 is further configured to: after the receiving apparatus 1203 receives the data exchange result, if the STA has the association relationship with the source AP, feed back the data exchange result to the source AP; or if the STA has no association relationship with the source AP, initiate a disassociation operation to the destination AP, after the STA is disassociated from the destination AP, initiate an association operation to the source AP, and after an association relationship between the STA and the source AP is established, send the data exchange result to the source AP; or if the STA has no association relationship with the source AP, send the data exchange result to the source AP by using a common function frame.

The sending apparatus 1202 is further configured to: after sending the available AP of the STA and the operating channel of the available AP, send a link quality parameter or a load parameter of the operating channel of the available AP of the STA to the source AP; or if the STA receives a parameter feedback request sent by the source AP, feed back a link quality parameter or a load parameter of an operating channel of the destination AP of the STA to the source AP, where the feedback request message includes the destination AP.

The memory 1204 is configured to store the available AP of the STA, the operating channel of the available AP, and the link quality parameter and the load parameter of the operating channel of the available AP, the destination AP, the data from the source AP, and the data exchange result. In this embodiment of the present invention, a STA sends an available AP of the STA and an operating channel of the available AP to a source AP having an association relationship with the STA; and if the STA receives a relay request message sent by the source AP, the STA is a relay STA determined by the source AP, where the relay request message includes a destination AP, and the STA sends data from the source AP to the destination AP. Therefore, data exchange between the source AP and the destination AP can be performed effectively, particularly data exchange between APs that are connected in a non-wired manner in a dense deployment scenario or need to perform wireless information transmission in a dense deployment scenario.

Refer to FIG. 13, which is an embodiment of a system for data exchange between APs in a WiFi system according to an embodiment of the present invention, where the system includes:
the source AP 8 as described in Embodiment 8, 9, or 11, the STA 8 as described in Embodiment 10 or 12, and a destination AP 1303, where the destination AP is configured to receive data that is from the source AP 8 and that is sent by the STA 8. It should be noted that the destination AP may also have the structure as described in Embodiment 8, 9, or 11.

A person of ordinary skill in the art may understand that all or some of the steps of the methods in the embodiments may be implemented by a program instructing relevant hardware. The program may be stored in a computer readable storage medium. The storage medium may be a non-volatile storage medium, such as a read-only memory, a magnetic disk, or an optical disc. The foregoing describes in detail a method, an apparatus, and a system for data exchange between APs in a WiFi system according to the present invention. A person of ordinary skill in the art may, based on the idea of the embodiments of the present invention, make modifications with respect to the specific implementation manners and the application scope. Therefore, the content in this specification shall not be construed as a limitation on the present invention.

## Claims

1. A method for data exchange between access points, APs, in a WiFi system, comprising:
receiving (101, 301), by a source AP (8), available APs of all stations, STAs (10), having association relationships with the source AP (8), and operating channels of the available APs, wherein the available APs and the operating channels of the available APs are sent by the STAs (10);
determining (102), by the source AP (8), a relay STA according to the received available APs of the STAs (10) and the received operating channels of the available APs, wherein an available AP of the relay STA comprises a destination AP (1303) that needs to perform data exchange with the source AP (8) to manage and allocate dynamically resources between densely-deployed APs; and
sending (103) a relay request message to the relay STA, wherein the relay request message comprises the destination AP (1303), so that the relay STA sends data from the source AP (8) to the destination AP (1303) after receiving the relay request message, so as to perform the data exchange between the source AP (8) and the destination AP (1303).

2. The method according to claim 1, wherein the determining (102), by the source AP (8), a relay STA according to the received available APs of the STAs (10) and the received operating channels of the available APs comprises:
determining (302) a candidate STA from all the STAs (10) having the association relationships with the source AP (8), wherein an available AP of the candidate STA comprises the destination AP (1303);
sending (303), by the source AP (8), a parameter feedback request to the candidate STA, wherein the parameter feedback request comprises the destination AP (1303);
receiving (304) a link quality parameter or a load parameter that is of an operating channel of the destination AP (1303) in the available AP of the candidate STA and that is fed back by the candidate STA; and
determining (305) an operating channel having a maximum link quality parameter or a minimum load parameter in the operating channel of the destination AP (1303) of the candidate STA as an optimal operating channel, and determining a candidate STA comprising the optimal operating channel as the relay STA.

3. The method according to claim 1, wherein the method further comprises:
receiving (401), by the source AP (8), link quality parameters or load parameters that are of the operating channels of the available APs of all the STAs (10) having the association relationships with the source AP (8) and that are sent by the STAs (10); and
the determining (102), by the source AP (8), a relay STA according to the received available APs of the STAs (10) and the received operating channels of the available APs comprises:
determining (402) a candidate STA from all the STAs (10) having the association relationships with the source AP (8), wherein an available AP of the candidate STA comprises the destination AP (1303); and
determining (403) an operating channel having a maximum link quality parameter or a minimum load parameter in an operating channel of the destination AP (1303) of the candidate STA as an optimal operating channel, and determining a candidate STA comprising the optimal operating channel as the relay STA.

4. The method according to claim 2 or 3, wherein the relay request message further comprises the optimal operating channel, and the optimal operating channel is an operating channel used by the relay STA when the relay STA sends the data from the source AP (8) to the destination AP (1303).

5. The method according to any one of claims 1 to 4, further comprising:
sending (601), by the relay STA (10) determined by the source AP (8), an available AP of the relay STA (10) and an operating channel of the available AP to the source AP (8) having an association relationship with the relay STA (10), wherein the available AP of the relay STA (10) comprises the destination AP (1303); and
if the relay STA (10) receives the relay request message sent by the source AP (8), sending (602), by the relay STA (10), data from the source AP (8) to the destination AP (1303).

6. The method according to claim 5, wherein before the sending, by the relay STA (10), data from the source AP (8) to the destination AP (1303), the method further comprises:
randomly selecting an operating channel from an operating channel of the destination AP (1303) of the relay STA (10); or if the relay STA (10) has acquired a link quality parameter or a load parameter of the operating channel of the available AP of the relay STA (10), selecting, by the relay STA (10), from an operating channel of the destination AP (1303) of the relay STA (10), an operating channel having a maximum link quality parameter or a minimum load parameter; and
the sending, by the relay STA (10), the data to the destination AP (1303) comprises:
sending, by the relay STA (10), the data from the source AP (8) to the destination AP (1303) by using the selected operating channel.

7. The method according to claim 6, wherein the sending, by the relay STA (10), the data from the source AP (8) to the destination AP (1303) by using the selected operating channel comprises:
if the relay STA (10) has an association relationship with the destination AP (1303), sending the data from the source AP (8) to the destination AP (1303) by directly using the selected operating channel; or
if the relay STA (10) has no association relationship with the destination AP (1303) and the relay STA (10) can have association relationships with multiple APs, initiating, by the relay STA (10), an association operation to the destination AP (1303), and after an association relationship between the relay STA (10) and the destination AP (1303) is established, sending the data from the source AP (8) to the destination AP (1303) by using the selected operating channel; or
if the relay STA (10) has no association relationship with the destination AP (1303) and the relay STA (10) can have an association relationship with only one AP, initiating, by the relay STA (10), a disassociation operation to the source AP (8), after the relay STA (10) is disassociated from the source AP (8), initiating, by the relay STA (10), an association operation to the destination AP (1303), and after an association relationship between the relay STA (10) and the destination AP (1303) is established, sending the data from the source AP (8) to the destination AP (1303) by using the selected operating channel; or
if the relay STA (10) has no association relationship with the destination AP (1303), sending a common function frame to the destination AP (1303) by using the selected operating channel, wherein the common function frame carries the data from the source AP (8).

8. An access point, AP (8), which is a source AP (8), comprising:
a receiving module (801), configured to receive available APs of all stations, STAs (10), having association relationships with the source AP (8), and operating channels of the available APs, wherein the available APs and the operating channels of the available APs are sent by the STAs (10);
a determining module (802), configured to: after the receiving module (801) receives the available APs of the STAs (10) and the operating channels of the available APs, determine a relay STA according to the received available APs of the STAs (10) and the received operating channels of the available APs, wherein an available AP of the relay STA comprises a destination AP (1303) that needs to perform data exchange with the source AP (8) to manage and allocate dynamically resources between densely-deployed APs; and
a sending module (803), configured to: after the determining module (802) determines the relay STA, send a relay request message to the relay STA, wherein the relay request message comprises the destination AP (1303), so that the relay STA sends data from the source AP (8) to the destination AP (1303) after receiving the relay request message, so as to perform the data exchange between the source AP (8) and the destination AP (1303).

9. The AP (8) according to claim 8, wherein the determining module (802) comprises:
a candidate determining module (901), configured to: after the receiving module (801) receives the available APs of all the STAs (10) having the association relationships with the source AP (8), and the operating channels of the available APs, wherein the available APs and the operating channels of the available APs are sent by the STAs, determine a candidate STA from all the STAs (10) having the association relationships with the source AP (8), wherein an available AP of the candidate STA comprises the destination AP (1303);
a request sending module (902), configured to: after the candidate determining module (901) determines the candidate STA, send a parameter feedback request to the candidate STA, wherein the parameter feedback request comprises the destination AP (1303);
a feedback receiving module (903), configured to: after the request sending module (902) sends the parameter feedback request, receive a link quality parameter or a load parameter that is of an operating channel of the destination AP (1303) in the available AP of the candidate STA and that is fed back by the candidate STA; and
a relay determining module (904), configured to: after the feedback receiving module (903) receives a link quality parameter or a load parameter, determine an operating channel having a maximum link quality parameter or a minimum load parameter in the operating channel of the destination AP (1303) of the candidate STA as an optimal operating channel, and determine a candidate STA comprising the optimal operating channel as the relay STA.

10. The AP (8) according to claim 9, wherein the receiving module (801) is further configured to receive link quality parameters or load parameters that are of the operating channels of the available APs of all the STAs (10) having the association relationships with the source AP (8) and that are sent by the STAs (10); and
the relay determining module (904) in the determining module (802) is further configured to:
after the candidate determining module (901) determines the candidate STA, determine an operating channel having a maximum link quality parameter or a minimum load parameter in an operating channel of the destination AP (1303) of the candidate STA as an optimal operating channel, and determine a candidate STA comprising the optimal operating channel as the relay STA.

11. The AP (8) according to claim 9 or 10, wherein the relay request message further comprises the optimal operating channel, and the optimal operating channel is an operating channel used by the relay STA when the relay STA sends the data from the source AP (8) to the destination AP (1303).

12. A system for data exchange between access points, APs, in a WiFi system, comprising an AP (8), which is the source AP (8) according to any one of the claims 8 to 11, a station, STA (10), wherein the STA (10) is the relay STA (10) determined by the source AP (8), and a destination AP (1203) configured to receive data that is from the source AP (8) and that is sent by the relay STA (8), wherein the relay STA (10) comprises:
an information sending module (1001), configured to send an available access point, AP, of the relay STA (10) and an operating channel of the available AP to the source AP (8) having an association relationship with the relay STA (10), wherein the available AP of the relay STA (10) comprises the destination AP (1303); and
a data sending module (1002), configured to: after the information sending module (1001) sends the available AP of the relay STA (10) and the operating channel of the available AP, if the relay STA (10) receives a relay request message sent by the source AP (8), wherein the relay request message comprises the destination AP (1303), send data from the source AP (8) to the destination AP (1203).

13. The system according to claim 12, wherein the relay STA (10) further comprises:
a selection module (1003), configured to: before the data sending module (1002) sends the data from the source AP (8), randomly select an operating channel from an operating channel of the destination AP (1303) of the relay STA (10); or if the relay STA (10) has already acquired a link quality parameter or a load parameter of the operating channel of the available AP of the relay STA (10), select, from an operating channel of the destination AP (1303) of the relay STA (10), an operating channel having a maximum link quality parameter or a minimum load parameter; and
the data sending module (1002) is configured to send the data from the source AP (8) to the destination AP (1303) by using the selected operating channel.

14. The system according to claim 13, wherein the data sending module (1002) is specifically configured to: if the relay STA (10) has an association relationship with the destination AP (1303), send the data from the source AP (8) to the destination AP (1303) by directly using the selected operating channel; or
if the relay STA (10) has no association relationship with the destination AP (1303) and the relay STA (10) can have association relationships with multiple APs, initiate an association operation to the destination AP (1303), and after an association relationship between the relay STA (10) and the destination AP (1303) is established, send the data from the source AP (8) to the destination AP (1303) by using the selected operating channel; or
if the relay STA (10) has no association relationship with the destination AP (1303) and the relay STA (10) can have an association relationship with only one AP, initiate a disassociation operation to the source AP (8), after the relay STA (10) is disassociated from the source AP (8), initiate an association operation to the destination AP (1303), and after an association relationship between the relay STA (10) and the destination AP (1303) is established, send the data from the source AP (8) to the destination AP (1303) by using the selected operating channel; or
if the relay STA (10) has no association relationship with the destination AP (1303), send a common function frame to the destination AP (1303) by using the selected operating channel, wherein the common function frame carries the data from the source AP (8).

15. The system according to claim 12, wherein the relay request message further comprises an operating channel used by the relay STA (10) when the relay STA (10) sends the data from the source AP (8) to the destination AP (1303); and
the data sending module (1002) is specifically configured to:
if the relay STA (10) has an association relationship with the destination AP (1303), send the data from the source AP (8) to the destination AP (1303) by directly using the operating channel comprised in the relay request message; or
if the relay STA (10) has no association relationship with the destination AP (1303) and the relay STA (10) can have association relationships with multiple APs, initiate an association operation to the destination AP (1303), and after an association relationship between the relay STA (10) and the destination AP (1303) is established, send the data from the source AP (8) to the destination AP (1303) by using the operating channel comprised in the relay request message; or
if the relay STA (10) has no association relationship with the destination (1303) AP and the relay STA (10) can have an association relationship with only one AP, initiate a disassociation operation to the source AP (8), after the relay STA (10) is disassociated from the source AP (8), initiate an association operation to the destination AP (1303), and after an association relationship between the relay STA (10) and the destination AP (1303) is established, send the data from the source AP (8) to the destination AP (1303) by using the operating channel comprised in the relay request message; or
if the relay STA (10) has no association relationship with the destination AP (1303), send a common function frame to the destination AP (1303) by using the operating channel comprised in the relay request message, wherein the common function frame carries the data from the source AP (8).

## Patentansprüche

1. Verfahren zum Datenaustausch zwischen Zugangspunkten APs in einem WiFi-System, aufweisend:
Empfangen (101, 301), durch einen Quellen-AP (8), von verfügbaren APs von allen Stationen STAs (10) mit Verbindungsbeziehungen mit dem Quellen-AP (8) und Betriebskanäle der verfügbaren APs, wobei die verfügbaren APs und die Betriebskanäle der verfügbaren APs durch die STAs (10) gesendet werden;
Bestimmen (102), durch den Quellen-AP (8), einer Relais-STA gemäß den empfangenen verfügbaren APs der STAs (10) und den empfangenen Betriebskanälen der verfügbaren APs, wobei ein verfügbarer AP der Relais-STA einen Ziel-AP (1303) aufweist, der einen Datenaustausch mit dem Quellen-AP (8) ausführen muss, um dynamische Ressourcen zwischen dicht eingesetzten APs zu verwalten und zuzuweisen; und
Senden (103) einer Relais-Anforderungsnachricht zur Relais-STA, wobei die Relais-Anforderungsnachricht den Ziel-AP (1303) aufweist, sodass die Relais-STA nach dem Empfangen der Relais-Anforderungsnachricht Daten von dem Quellen-AP (8) an den Ziel-AP (1303) sendet, um den Datenaustausch zwischen dem Quellen-AP (8) und dem Ziel-AP (1303) auszuführen.

2. Verfahren nach Anspruch 1, wobei das Bestimmen (102), durch den Quellen-AP (8), einer Relais-STA gemäß den empfangenen verfügbaren APs der STAs (10) und den empfangenen Betriebskanälen der verfügbaren APs aufweist:
Bestimmen (302) einer Kandidaten-STA von allen STAs (10) mit Verbindungsbeziehungen mit dem Quellen-AP (8), wobei ein verfügbarer AP der Kandidaten-STA den Ziel-AP (1303) aufweist;
Senden (303), durch den Quellen-AP (8), einer Parameterfeedbackanforderung an die Kandidaten-STA, wobei die Parameterfeedbackanforderung den Ziel-AP (1303) aufweist;
Empfangen (304) eines Verbindungsqualitätsparameters oder eines Lastparameters, der von einem Betriebskanal des Ziel-AP (1303) im verfügbaren AP der Kandidaten-STA stammt und von der Kandidaten-STA zurückgeleitet wird; und
Bestimmen (305) eines Betriebskanals mit einem maximalen Verbindungsqualitätsparameter oder einem minimalen Lastparameter im Betriebskanal des Ziel-AP (1303) der Kandidaten-STA als ein optimaler Betriebskanal und Bestimmen einer Kandidaten-STA, die den optimalen Betriebskanal als die Relais-STA aufweist.

3. Verfahren nach Anspruch 1, wobei das Verfahren ferner aufweist:
Empfangen (401), durch den Quellen-AP (8), von Verbindungsqualitätsparametern oder Lastparameter, die von den Betriebskanälen der verfügbaren APs von allen STAs (10) mit den Verbindungsbeziehungen mit dem Quellen-AP (8) stammen und die durch die STAs (10) gesendet werden; und
wobei das Bestimmen (102), durch den Quellen-AP (8), einer Relais-STA gemäß den empfangenen verfügbaren APs der STAs (10) und der empfangenen Betriebskanäle der verfügbaren APs aufweist:
Bestimmen (402) einer Kandidaten-STA von allen STAs (10) mit Verbindungsbeziehungen mit dem Quellen-AP (8), wobei ein verfügbarer AP der Kandidaten-STA den Ziel-AP (1303) aufweist; und
Bestimmen (403) eines Betriebskanals mit einem maximalen Verbindungsqualitätsparameter oder einem minimalen Lastparameter in einem Betriebskanal des Ziel-AP (1303) der Kandidaten-STA als ein optimaler Betriebskanal und Bestimmen einer Kandidaten-STA, die den optimalen Betriebskanal als die Relais-STA aufweist.

4. Verfahren nach Anspruch 2 oder 3, wobei die Relais-Anforderungsnachricht ferner den optimalen Betriebskanal aufweist und der optimale Betriebskanal ein durch die Relais-STA verwendeter Betriebskanal ist, wenn die Relais-STA die Daten von dem Quellen-AP (8) an den Ziel-AP (1303) sendet.

5. Verfahren nach einem der Ansprüche 1 bis 4, ferner aufweisend:
Senden (601), durch die Relais-STA (10), die durch den Quellen-AP (8) bestimmt ist, einer verfügbaren AP der Relais-STA (10) und einen Betriebskanal des verfügbaren AP an den Quellen-AP (8) mit einer Verbindungsbeziehung mit der Relais-STA (10), wobei der verfügbare AP der Relais-STA (10) den Ziel-AP (1303) aufweist; und
wenn die Relais-STA (10) die Relais-Anforderungsnachricht empfängt, die durch den Quellen-AP (8) gesendet wurde, Senden (602), durch die Relais-STA (10), von Daten von dem Quellen-AP (8) an den Ziel-AP (1303).

6. Verfahren nach Anspruch 5, wobei vor dem Senden, durch die Relais-STA (10), von Daten von dem Quellen-AP (8) an den Ziel-AP (1303) das Verfahren ferner aufweist:
zufälliges Auswählen eines Betriebskanals von einem Betriebskanal des Ziel-AP (1303) der Relais-STA (10); oder wenn die Relais-STA (10) einen Verbindungsqualitätsparameter oder einen Lastparameter des Betriebskanals des verfügbaren AP der Relais-STA (10) erlangt hat, Auswählen, durch die Relais-STA (10), von einem Betriebskanal des Ziel-AP (1303) der Relais-STA (10), eines Betriebskanals mit einem maximalen Verbindungsqualitätsparameter oder einem minimalen Lastparameter; und das Senden, durch die Relais-STA (10), der Daten an den Ziel-AP (1303) aufweist:
Senden, durch die Relais-STA (10), der Daten von dem Quellen-AP (8) an den Ziel-AP (1303) unter Verwendung des ausgewählten Betriebskanals.

7. Verfahren nach Anspruch 6, wobei das Senden, durch die Relais-STA (10), der Daten von dem Quellen-AP (8) an den Ziel-AP (1303) unter Verwendung des ausgewählten Betriebskanals aufweist:
wenn die Relais-STA (10) eine Verbindungsbeziehung mit dem Ziel-AP (1303) aufweist, Senden der Daten von dem Quellen-AP (8) an den Ziel-AP (1303) durch direktes Verwenden des ausgewählten Betriebskanals; oder
wenn die Relais-STA (10) keine Verbindungsbeziehung mit dem Ziel-AP (1303) aufweist und die Relais-STA (10) Verbindungsbeziehungen mit mehreren APs aufweisen kann, Initiieren, durch die Relais-STA (10), einer Verbindungsoperation zu dem Ziel-AP (1303), und nachdem eine Verbindungsbeziehung zwischen der Relais-STA (10) und der Ziel-AP (1303) eingerichtet ist, Senden der Daten von dem Quellen-AP (8) an den Ziel-AP (1303) unter Verwendung des ausgewählten Betriebskanals; oder
wenn die Relais-STA (10) keine Verbindungsbeziehung mit dem Ziel-AP (1303) aufweist und die Relais-STA (10) eine Verbindungsbeziehung mit nur einem AP aufweisen kann, Initiieren, durch die Relais-STA (10), einer Trennungsoperation zu dem Quellen-AP (8), nachdem die Relais-STA (10) von dem Quellen-AP (8) getrennt ist, Initiieren, durch die Relais-STA (10), einer Verbindungsoperation zu dem Ziel-AP (1303), und nachdem eine Verbindungsbeziehung zwischen der Relais-STA (10) und der Ziel-AP (1303) eingerichtet ist, Senden der Daten von dem Quellen-AP (8) an den Ziel-AP (1303) unter Verwendung des ausgewählten Betriebskanals; oder wenn die Relais-STA (10) keine Verbindungsbeziehung mit dem Ziel-AP (1303) aufweist, Senden eines gemeinsamen Funktionsrahmens an den Ziel-AP (1303) unter Verwendung des ausgewählten Betriebskanals, wobei der gemeinsame Funktionsrahmen die Daten von dem Quellen-AP (8) überträgt.

8. Zugangspunkt AP (8), der ein Quellen-AP (8) ist, aufweisend:
ein Empfangsmodul (801), das konfiguriert ist, verfügbare APs von allen Stationen STAs (10) mit Verbindungsbeziehungen mit dem Quellen-AP (8) und Betriebskanälen der verfügbaren APs zu empfangen, wobei die verfügbaren APs und die Betriebskanäle der verfügbaren APs durch die STAs (10) gesendet werden;
ein Bestimmungsmodul (802), das konfiguriert ist zum: nachdem das Empfangsmodul (801) die verfügbaren APs der STAs (10) und die Betriebskanäle der verfügbaren APs empfangen hat, Bestimmen einer Relais-STA gemäß den empfangenen verfügbaren APs der STAs (10) und den empfangenen Betriebskanälen der verfügbaren APs, wobei ein verfügbarer AP der Relais-STA einen Ziel-AP (1303) aufweist, der einen Datenaustausch mit dem Quellen-AP (8) ausführen muss, um dynamische Ressourcen zwischen dicht eingesetzten APs zu verwalten und zuzuweisen; und
ein Sendemodul (803), das konfiguriert ist zum: nachdem das Bestimmungsmodul (802) die Relais-STA bestimmt hat, Senden einer Relais-Anforderungsnachricht an die Relais-STA, wobei die Relais-Anforderungsnachricht den Ziel-AP (1303) aufweist, sodass die Relais-STA nach dem Empfangen der Relais-Anforderungsnachricht Daten von dem Quellen-AP (8) an den Ziel-AP (1303) sendet, um den Datenaustausch zwischen dem Quellen-AP (8) und dem Ziel-AP (1303) auszuführen.

9. AP (8) nach Anspruch 8, wobei das Bestimmungsmodul (802) aufweist:
ein Kandidatenbestimmungsmodul (901), das konfiguriert ist zum: nachdem das Empfangsmodul (801) die verfügbaren APs von allen STAs (10) mit den Verbindungsbeziehungen mit dem Quellen-AP (8) und den Betriebskanälen der verfügbaren APs empfangen hat, wobei die verfügbaren APs und die Betriebskanäle der verfügbaren APs durch die STAs gesendet werden, Bestimmen einer Kandidaten-STA von allen STAs (10) mit den Verbindungsbeziehungen mit dem Quellen-AP (8), wobei ein verfügbarer AP der Kandidaten-STA den Ziel-AP (1303) aufweist;
ein Anforderungssendemodul (902), das konfiguriert ist zum: nachdem das Kandidatenbestimmungsmodul (901) die Kandidaten-STA bestimmt, Senden einer Parameterfeedbackanforderung zur Kandidaten-STA, wobei die Parameterfeedbackanforderung den Ziel-AP (1303) aufweist;
ein Feedbackempfangsmodul (903), das konfiguriert ist zum: nachdem das Anforderungssendemodul (902) die Parameterfeedbackanforderung gesendet hat, Empfangen eines Verbindungsqualitätsparameters oder eines Lastparameters, der von einem Betriebskanal des Ziel-AP (1303) im verfügbaren AP der Kandidaten-STA stammt und durch die Kandidaten-STA zurückgeleitet wird; und
ein Relais-Bestimmungsmodul (904), das konfiguriert ist zum: nachdem das Feedbackempfangsmodul (903) einen Verbindungsqualitätsparameter oder einen Lastparameter empfängt, Bestimmen eines Betriebskanals mit einem maximalen Verbindungsqualitätsparameter oder einem minimalen Lastparameter in dem Betriebskanal des Ziel-AP (1303) der Kandidaten-STA als ein optimaler Betriebskanal und bestimmen einer Kandidaten-STA, die den optimalen Betriebskanal aufweist, als die Relais-STA.

10. AP (8) nach Anspruch 9, wobei das Empfangsmodul (801) ferner konfiguriert ist zum Empfangen von Verbindungsqualitätsparametern oder Lastparametern, die von den Betriebskanälen der verfügbaren APs von allen STAs (10) mit den Verbindungsbeziehungen mit dem Quellen-AP (8) stammen und durch die STAs (10) gesendet werden; und
das Relais-Bestimmungsmodul (904) im Bestimmungsmodul (802) ferner konfiguriert ist zum: nachdem das Kandidatenbestimmungsmodul (901) die Kandidaten-STA bestimmt hat, Bestimmen eines Betriebskanals mit einem maximalen Verbindungsqualitätsparameter oder einem minimalen Lastparameter in einem Betriebskanal des Ziel-AP (1303) der Kandidaten-STA als ein optimaler Betriebskanal und Bestimmen einer Kandidaten-STA, die den optimalen Betriebskanal aufweist, als die Relais-STA.

11. AP (8) nach Anspruch 9 oder 10, wobei die Relais-Anforderungsnachricht ferner den optimalen Betriebskanal aufweist und der optimale Betriebskanal ein durch die Relais-STA verwendeter Betriebskanal ist, wenn die Relais-STA die Daten von dem Quellen-AP (8) an den Ziel-AP (1303) sendet.

12. System zum Datenaustausch zwischen Zugangspunkten APs in einem WiFi-System, das einen AP (8), welcher der Quellen-AP (8) nach einem der Ansprüche 8 bis 11 ist, eine Station STA (10), wobei die STA (10) die Relais-STA (10) ist, die durch den Quellen-AP (8) bestimmt ist, und einen Ziel-AP (1203) aufweist, der konfiguriert ist, Daten zu empfangen, die von dem Quellen-AP (8) stammen und durch die Relais-STA (8) gesendet werden, wobei die Relais-STA (10) aufweist:
ein Informationssendemodul (1001), das konfiguriert ist, einen verfügbaren Zugangspunkt AP von der Relais-STA (10) und einen Betriebskanal des verfügbaren AP an den Quellen-AP (8) mit einer Verbindungsbeziehung mit der Relais-STA (10) zu senden, wobei der verfügbare AP der Relais-STA (10) den Ziel-AP (1303) aufweist; und
ein Datensendemodul (1002), das konfiguriert ist zum: nachdem das Informationssendemodul (1001) den verfügbaren AP der Relais-STA (10) und den Betriebskanal des verfügbaren AP sendet, wenn die Relais-STA (10) eine Relais-Anforderungsnachricht empfängt, die durch den Quellen-AP (8) gesendet wird, wobei die Relais-Anforderungsnachricht den Ziel-AP (1303) aufweist, Senden von Daten von dem Quellen-AP (8) an den Ziel-AP (1203).

13. System nach Anspruch 12, wobei die Relais-STA (10) ferner aufweist:
ein Auswahlmodul (1003), das konfiguriert ist zum: bevor das Datensendemodul (1002) die Daten von dem Quellen-AP (8) sendet, zufälligen Auswählen eines Betriebskanals von einem Betriebskanal des Ziel-AP (1303) der Relais-STA (10); oder wenn die Relais-STA (10) bereits einen Verbindungsqualitätsparameter oder einen Lastparameter des Betriebskanals des verfügbaren AP der Relais-STA (10) erlangt hat, Auswählen, von einem Betriebskanal des Ziel-AP (1303) der Relais-STA (10), eines Betriebskanals mit einem maximalen Verbindungsqualitätsparameter oder einem minimalen Lastparameter;
und
das Datensendemodul (1002) konfiguriert ist, die Daten von dem Quellen-AP (8) an den Ziel-AP (1303) unter Verwendung des ausgewählten Betriebskanals zu senden.

14. System nach Anspruch 13, wobei das Datensendemodul (1002) speziell konfiguriert ist zum: wenn die Relais-STA (10) eine Verbindungsbeziehung mit dem Ziel-AP (1303) aufweist, Senden der Daten von dem Quellen-AP (8) an den Ziel-AP (1303) durch direktes Verwenden des ausgewählten Betriebskanals; oder
wenn die Relais-STA (10) keine Verbindungsbeziehung mit dem Ziel-AP (1303) aufweist und die Relais-STA (10) Verbindungsbeziehungen mit mehreren APs aufweisen kann, Initiieren einer Verbindungsoperation zu dem Ziel-AP (1303), und nachdem eine Verbindungsbeziehung zwischen der Relais-STA (10) und dem Ziel-AP (1303) eingerichtet ist, Senden der Daten von dem Quellen-AP (8) an den Ziel-AP (1303) unter Verwendung des ausgewählten Betriebskanals; oder
wenn die Relais-STA (10) keine Verbindungsbeziehung mit dem Ziel-AP (1303) aufweist und die Relais-STA (10) eine Verbindungsbeziehung mit nur einem AP aufweisen kann, Initiieren einer Trennungsoperation zu dem Quellen-AP (8), nachdem die Relais-STA (10) von dem Quellen-AP (8) getrennt ist, Initiieren einer Verbindungsoperation zu dem Ziel-AP (1303), und nachdem eine Verbindungsbeziehung zwischen der Relais-STA (10) und der Ziel-AP (1303) eingerichtet ist, Senden der Daten von dem Quellen-AP (8) an den Ziel-AP (1303) unter Verwendung des ausgewählten Betriebskanals; oder
wenn die Relais-STA (10) keine Verbindungsbeziehung mit dem Ziel-AP (1303) aufweist, Senden eines gemeinsamen Funktionsrahmens an den Ziel-AP (1303) unter Verwendung des ausgewählten Betriebskanals, wobei der gemeinsame Funktionsrahmen die Daten von dem Quellen-AP (8) überträgt.

15. System nach Anspruch 12, wobei die Relais-Anforderungsnachricht ferner einen Betriebskanal aufweist, der durch die Relais-STA (10) verwendet wird, wenn die Relais-STA (10) die Daten von dem Quellen-AP (8) an den Ziel-AP (1303) sendet; und
das Datensendemodul (1002) speziell konfiguriert ist zum:
wenn die Relais-STA (10) eine Verbindungsbeziehung mit dem Ziel-AP (1303) aufweist, Senden der Daten von dem Quellen-AP (8) an den Ziel-AP (1303) durch direktes verwenden des in der Relais-Anforderungsnachricht beinhalteten Betriebskanals; oder wenn die Relais-STA (10) keine Verbindungsbeziehung mit dem Ziel-AP (1303) aufweist und die Relais-STA (10) Verbindungsbeziehungen mit mehreren APs aufweisen kann, Initiieren einer Verbindungsoperation zu dem Ziel-AP (1303), und nachdem eine Verbindungsbeziehung zwischen der Relais-STA (10) und der Ziel-AP (1303) eingerichtet ist, Senden der Daten von dem Quellen-AP (8) an den Ziel-AP (1303) durch Verwenden des in der Relais-Anforderungsnachricht beinhalteten Betriebskanals; oder wenn die Relais-STA (10) keine Verbindungsbeziehung mit dem Ziel-AP (1303) aufweist und die Relais-STA (10) eine Verbindungsbeziehung mit nur einem AP aufweisen kann, Initiieren einer Trennungsoperation zu dem Quellen-AP (8), nachdem die Relais-STA (10) von dem Quellen-AP (8) getrennt ist, Initiieren einer Verbindungsoperation zu dem Ziel-AP (1303), und nachdem eine Verbindungsbeziehung zwischen der Relais-STA (10) und der Ziel-AP (1303) eingerichtet ist, Senden der Daten von dem Quellen-AP (8) an den Ziel-AP (1303) durch Verwenden des in der Relais-Anforderungsnachricht beinhalteten Betriebskanals; oder
wenn die Relais-STA (10) keine Verbindungsbeziehung mit dem Ziel-AP (1303) aufweist, Senden eines gemeinsamen Funktionsrahmens an den Ziel-AP (1303) unter Verwendung des in der Relais-Anforderungsnachricht beinhalteten Betriebskanals, wobei der gemeinsame Funktionsrahmen die Daten von dem Quellen-AP (8) überträgt.

## Revendications

1. Procédé d'échange de données entre des points d'accès, AP, dans un système WiFi, comprenant :
la réception (101, 301), par un point d'accès source (8), des points d'accès disponibles de toutes les stations, STA (10), ayant des relations d'association avec le point d'accès source (8) et les canaux d'exploitation des points d'accès disponibles, les points d'accès disponibles et les canaux d'exploitation des points d'accès disponibles étant envoyés par les stations (10) ;
la détermination (102), par le point d'accès source (8), d'une station de relais en fonctions des point d'accès disponibles reçus des stations (10) et des canaux d'exploitation reçus des points d'accès disponibles, dans lequel un point d'accès disponible de la station de relais comprend un point d'accès de destination (1303) qui doit effectuer un échange de données avec le point d'accès source (8) pour gérer et allouer dynamiquement des ressources entre des points d'accès déployés de façon dense ; et
l'envoi (103) d'un message de demande de relais à la station de relais, dans lequel le message de demande de relais comprend le point d'accès de destination (1303), de sorte que la station de relais envoie des données du point d'accès source (8) au point d'accès de destination (1303) après réception du message de demande de relais, pour effectuer l'échange de données entre le point d'accès source (8) et le point d'accès de destination (1303).

2. Procédé selon la revendication 1, dans lequel la détermination (102), par le point d'accès source (8), d'une station de relais en fonction des points d'accès disponibles reçus des stations (10) et des canaux d'exploitation reçus des points d'accès disponibles, comprend :
la détermination (302) d'une station candidate parmi toutes les stations (10) ayant des relations d'association avec le point d'accès source (8), dans lequel un point d'accès disponible de la station candidate comprend le point d'accès de destination (1303) ;
l'envoi (303), par le point d'accès source (8), d'une demande de retour de paramètre à la station candidate, la demande de retour de paramètre comprenant le point d'accès de destination (1303) ;
la réception (304) d'un paramètre de qualité des liaisons ou d'un paramètre de charge concernant un canal d'exploitation du point d'accès de destination (1303) dans le point d'accès disponible de la station candidate et qui est renvoyé par la station candidate ; et
la détermination (305) d'un canal d'exploitation ayant un paramètre maximal de qualité des liaisons ou un paramètre de charge minimal dans le canal d'exploitation du point d'accès de destination (1303) de la station candidate comme canal d'exploitation optimal,
et la détermination d'une station candidate comprenant le canal d'exploitation optimal comme station de relais.

3. Procédé selon la revendication 1, dans lequel le procédé comprend en outre :
la réception (401), par le point d'accès source (8), des paramètres de qualité des liaisons ou des paramètres de charge qui sont des canaux d'exploitation des point d'accès disponibles de toutes les stations (10) ayant des relations d'association avec le point d'accès source (8) et qui sont envoyés par les stations (10) ; et
la détermination (102), par le point d'accès source (8), d'une station de relais en fonction des points d'accès disponibles reçus des stations (10) et des canaux d'exploitation reçus des points d'accès disponibles, comprend :
la détermination (402) d'une station candidate parmi toutes les stations (10) ayant des relations d'association avec le point d'accès source (8), dans lequel un point d'accès disponible de la station candidate comprend le point d'accès de destination (1303) ; et
la détermination (403) d'un canal d'exploitation ayant un paramètre maximal de qualité des liaisons ou un paramètre de charge minimal dans le canal d'exploitation du point d'accès de destination (1303) de la station candidate comme canal d'exploitation optimal, et la détermination d'une station candidate comprenant le canal d'exploitation optimal comme station de relais.

4. Procédé selon la revendication 2 ou 3, dans lequel le message de demande de relais comprend en outre le canal d'exploitation optimal, et le canal d'exploitation optimal est un canal d'exploitation utilisé par la station de relais lorsque la station de relais envoie les données du point d'accès source (8) au point d'accès de destination (1303).

5. Procédé selon l'une quelconque des revendications 1 à 4, comprenant en outre :
l'envoi (601), par la station de relais (10) déterminée par le point d'accès source (8), d'un point d'accès disponible de la station de relais (10) et d'un canal d'exploitation du point d'accès disponible au point d'accès source (8) ayant une relation d'association avec la station de relais (10), dans lequel le point d'accès disponible de la station de relais (10) comprend le point d'accès de destination (1303) ; et
si la station de relais (10) reçoit le message de demande de relais envoyé par le point d'accès source (8), l'envoi (602), par la station de relais (10), des données du point d'accès source (8) au point d'accès de destination (1303).

6. Procédé selon la revendication 5, dans lequel, avant l'envoi, par la station de relais (10), des données provenant du point d'accès source (8) au point d'accès de destination (1303), le procédé comprend en outre :
la sélection de manière aléatoire d'un canal d'exploitation à partir d'un canal d'exploitation du point d'accès de destination (1303) de la station de relais (10) ; ou si la station de relais (10) a acquis un paramètre de qualité des liaisons ou un paramètre de charge du canal d'exploitation du point d'accès disponible de la station de relais (10), la sélection, par la station de relais (10), à partir d'un canal d'exploitation du point d'accès de destination (1303) de la station de relais (10), d'un canal d'exploitation ayant un paramètre de qualité des liaisons maximal ou un paramètre de charge minimal ; et
l'envoi, par la station de relais (10), des données au point d'accès de destination (1303) comprend : l'envoi, par la station de relais (10), des données provenant du point d'accès source (8) au point d'accès de destination (1303) en utilisant le canal d'exploitation sélectionné.

7. Procédé selon la revendication 6, dans lequel l'envoi, par la station de relais (10), des données provenant du point d'accès source (8) au point d'accès de destination (1303) en utilisant le canal d'exploitation sélectionné, comprend :
si la station de relais (10) a une relation d'association avec le point d'accès de destination (1303), l'envoi des données du point d'accès source (8) au point d'accès de destination (1303) en utilisant directement le canal d'exploitation sélectionné ; ou
si la station de relais (10) n'a pas de relation d'association avec le point d'accès de destination (1303) et la station de relais (10) peut avoir des relations d'association avec plusieurs points d'accès, le lancement, par la station de relais (10), d'une opération d'association au point d'accès de destination (1303), et après qu'une relation d'association entre la station de relais (10) et le point d'accès de destination (1303) est établie, l'envoi des données provenant du point d'accès source (8) au point d'accès de destination (1303) en utilisant le canal d'exploitation sélectionné ; ou
si la station de relais (10) n'a pas de relation d'association avec le point d'accès de destination (1303) et la station de relais (10) peut avoir une relation d'association avec un seul point d'accès, le lancement, par la station de relais (10), d'une opération de dissociation au point d'accès source (8), après dissociation de la station de relais (10) du point d'accès source (8), le lancement, par la station de relais (10), d'une opération d'association au point d'accès de destination (1303), et après qu'une relation d'association entre la station de relais (10) et le point d'accès de destination (1303) est établie, l'envoi des données provenant du point d'accès source (8) au point d'accès de destination (1303) en utilisant le canal d'exploitation sélectionné ; ou
si la station de relais (10) n'a pas de relation d'association avec le point d'accès de destination (1303), l'envoi d'une trame de fonction commune au point d'accès de destination (1303) en utilisant le canal d'exploitation sélectionné, dans lequel la trame de fonction commune transporte les données provenant du point d'accès source (8).

8. Point d'accès, AP (8), qui est un point d'accès source (8), comprenant :
un module de réception (801), configuré pour recevoir des points d'accès disponibles de toutes les stations (10), ayant des relations d'association avec le point d'accès source (8), et des canaux d'exploitation des points d'accès disponibles, dans lequel les points d'accès disponibles et les canaux d'exploitation des point d'accès disponibles sont envoyés par les stations (10) ;
un module de détermination (802), configuré pour : après que le module de réception (801) a reçu les point d'accès disponibles des stations (10) et les canaux d'exploitation des points d'accès disponibles, déterminer une station de relais en fonction des point d'accès disponibles reçus des stations (10) et des canaux d'exploitation reçus du points d'accès, dans lequel un point d'accès disponible de la station de relais comprend un point d'accès de destination (1303) qui doit effectuer un échange de données avec le point d'accès source (8) pour gérer et allouer dynamiquement des ressources entre des point d'accès déployés de façon dense ; et
un module d'envoi (803), configuré pour : après que le module de détermination (802) a déterminé la station de relais, envoyer un message de demande de relais à la station de relais, dans lequel le message de demande de relais comprend le point d'accès de destination (1303), de sorte que la station de relais envoie des données du point d'accès source (8) au point d'accès de destination (1303) après avoir reçu le message de demande de relais, pour effectuer l'échange de données entre le point d'accès source (8) et le point d'accès de destination (1303).

9. Point d'accès (8) selon la revendication 8, dans lequel le module de détermination (802) comprend :
un module de détermination de candidat (901), configuré pour : après que le module de réception (801) a reçu les point d'accès disponibles de toutes les stations (10) ayant des relations d'association avec le point d'accès source (8) et les canaux d'exploitation des points d'accès disponibles, dans lequel les points d'accès disponibles et les canaux d'exploitation des point d'accès disponibles sont envoyés par les stations, déterminer une station candidate parmi toutes les stations (10) ayant des relations d'association avec le point d'accès source (8), dans lequel un point d'accès disponible de la station candidate comprend le point d'accès de destination (1303) ;
un module d'envoi de demande (902), configuré pour : après que le module de détermination de candidat (901) a déterminé la station candidate, envoyer une demande de retour de paramètre à la station candidate, dans lequel la demande de retour de paramètre comprend le point d'accès de destination (1303) ;
un module de réception d'informations de retour (903), configuré pour : après que le module d'envoi de demande (902) a envoyé la demande de retour de paramètre, recevoir un paramètre de qualité des liaisons ou un paramètre de charge d'un canal d'exploitation du point d'accès de destination (1303) dans le point d'accès disponible de la station candidate et qui est renvoyé par la station candidate ; et
un module de détermination de relais (904), configuré pour : après que le module de réception d'informations de retour (903) a reçu un paramètre de qualité des liaisons ou un paramètre de charge, déterminer un canal d'exploitation ayant un paramètre de qualité des liaisons maximal ou un paramètre de charge minimal dans le canal d'exploitation du point d'accès de destination (1303) de la station candidate comme canal d'exploitation optimal, et déterminer une station candidate comprenant le canal d'exploitation optimal comme station de relais.

10. Point d'accès (8) selon la revendication 9, dans lequel le module de réception (801) est en outre configuré pour recevoir des paramètres de qualité des liaisons ou des paramètres de charge des canaux d'exploitation des point d'accès disponibles de toutes les stations (10) ayant des relations d'association avec le point d'accès source (8) et qui sont envoyés par les stations (10) ; et
le module de détermination de relais (904) dans le module de détermination (802) est en outre configuré pour : après que le module de détermination de candidat (901) a déterminé la station candidate, déterminer un canal d'exploitation ayant un paramètre de qualité des liaisons maximal ou un paramètre de charge minimal dans un canal d'exploitation du point d'accès de destination (1303) de la station candidate comme canal d'exploitation optimal, et déterminer une station candidate comprenant le canal d'exploitation optimal comme station de relais.

11. Point d'accès (8) selon la revendication 9 ou 10, dans lequel le message de demande de relais comprend en outre le canal d'exploitation optimal, et le canal d'exploitation optimal est un canal d'exploitation utilisé par la station de relais lorsque la station de relais envoie les données du point d'accès source (8) au point d'accès de destination (1303).

12. Système d'échange de données entre points d'accès, AP, dans un système WiFi, comprenant un point d'accès (8), qui est le point d'accès source (8) selon l'une quelconque des revendications 8 à 11, une station STA (10), dans lequel la station (10) est la stations de relais (10) déterminée par le point d'accès source (8), et un point d'accès de destination (1203) configuré pour recevoir des données provenant du point d'accès source (8) et envoyées par la stations de relais (8) dans lequel la station de relais (10) comprend :
un module d'envoi d'informations (1001), configuré pour envoyer un point d'accès disponible, AP, de la station de relais (10) et un canal d'exploitation du point d'accès disponible au point d'accès source (8) ayant une relation d'association avec la station de relais (10), dans lequel le point d'accès disponible de la station de relais (10) comprend le point d'accès de destination (1303) ; et
un module d'envoi de données (1002), configuré pour: après que le module d'envoi d'informations (1001) envoie le point d'accès disponible de la station de relais (10) et le canal d'exploitation du point d'accès disponible, si la station de relais (10) reçoit un message de demande de relais envoyé par le point d'accès source (8), le message de demande de relais comprend le point d'accès de destination (1303), envoyer des données du point d'accès source (8) au point d'accès de destination (1203).

13. Système selon la revendication 12, dans lequel la station de relais (10) comprend en outre :
un module de sélection (1003), configuré pour : avant que le module d'envoi de données (1002) envoie les données du point d'accès source (8), sélectionner de manière aléatoire un canal d'exploitation à partir d'un canal d'exploitation du point d'accès de destination (1303) de la station de relais (10) ; ou si la station de relais (10) a déjà acquis un paramètre de qualité des liaisons ou un paramètre de charge du canal d'exploitation du point d'accès disponible de la station de relais (10), sélectionner, à partir d'un canal d'exploitation du point d'accès de destination (1303) de la station de relais (10), un canal d'exploitation ayant un paramètre de qualité des liaisons maximal ou un paramètre de charge minimal ; et
le module d'envoi de données (1002) est configuré pour envoyer les données du point d'accès source (8) au point d'accès de destination (1303) en utilisant le canal d'exploitation sélectionné.

14. Système selon la revendication 13, dans lequel le module d'envoi de données (1002) est spécifiquement configuré pour : si la station de relais (10) a une relation d'association avec le point d'accès de destination (1303), envoyer les données du point d'accès source (8) au point d'accès de destination (1303) en utilisant directement le canal d'exploitation sélectionné ; ou
si la station de relais (10) n'a pas de relation d'association avec le point d'accès de destination (1303) et la station de relais (10) peut avoir des relations d'association avec plusieurs points d'accès, lancer une opération d'association au point d'accès de destination (1303), et après qu'une relation d'association entre la station de relais (10) et le point d'accès de destination (1303) est établie, envoyer les données provenant du point d'accès source (8) au point d'accès de destination (1303) en utilisant le canal d'exploitation sélectionné ; ou
si la station de relais (10) n'a pas de relation d'association avec le point d'accès de destination (1303) et la station de relais (10) peut avoir une relation d'association avec un seul point d'accès, lancer une opération de dissociation vers le point d'accès source (8), après dissociation de la station de relais (10) du point d'accès source (8), lancer une opération d'association vers le point d'accès de destination (1303) et après qu'une relation d'association entre la station de relais (10) et le point d'accès de destination (1303) est établie, envoyer les données provenant du point d'accès source (8) au point d'accès de destination (1303) en utilisant le canal d'exploitation sélectionné ; ou
si la station de relais (10) n'a pas de relation d'association avec le point d'accès de destination (1303), envoyer une trame de fonction commune au point d'accès de destination (1303) en utilisant le canal d'exploitation sélectionné, dans lequel la trame de fonction commune transporte les données provenant du point d'accès source (8).

15. Système selon la revendication 12, dans lequel le message de demande de relais comprend en outre un canal d'exploitation utilisé par la station de relais (10) lorsque la station de relais (10) envoie les données du point d'accès source (8) au point d'accès de destination (1303) ; et
le module d'envoi de données (1002) est spécifiquement configuré pour :
si la station de relais (10) a une relation d'association avec le point d'accès de destination (1303), envoyer les données du point d'accès source (8) au point d'accès de destination (1303) en utilisant directement le canal d'exploitation compris dans le message de demande de relais ; ou
si la station de relais (10) n'a pas de relation d'association avec le point d'accès de destination (1303) et la station de relais (10) peut avoir des relations d'association avec plusieurs points d'accès, lancer une opération d'association au point d'accès de destination (1303), et après qu'une relation d'association entre la station de relais (10) et le point d'accès de destination (1303) est établie, envoyer les données du point d'accès source (8) au point d'accès de destination (1303) en utilisant le canal d'exploitation compris dans le message de demande de relais ; ou
si la station de relais (10) n'a pas de relation d'association avec le point d'accès de destination (1303) et la station de relais (10) peut avoir une relation d'association avec un seul point d'accès, lancer une opération de dissociation au point d'accès source (8), après dissociation de la station de relais (10) du point d'accès source (8), lancer une opération d'association au point d'accès de destination (1303), et après qu'une relation d'association entre la station de relais (10) et le point d'accès de destination (1303) est établie, envoyer les données du point d'accès source (8) au point d'accès de destination (1303) en utilisant le canal d'exploitation compris dans le message de demande de relais ; ou
si la station de relais (10) n'a pas de relation d'association avec le point d'accès de destination (1303), envoyer une trame de fonction commune au point d'accès de destination (1303) en utilisant le canal d'exploitation compris dans le message de demande de relais, dans lequel la trame de fonction commune transporte les données provenant du point d'accès source (8).
